(19) Europäisches Patentamt
European Patent Office
Office européen des brevets

(11) Veröffentlichungsnummer: **0 038 573 B1**

(12) # EUROPÄISCHE PATENTSCHRIFT

(45) Veröffentlichungstag der Patentschrift: **04.09.85**

(51) Int. Cl.⁴: **C 08 F 20/54**, C 02 F 1/56

(21) Anmeldenummer: **81103346.3**

(22) Anmeldetag: **21.12.79**

(60) Veröffentlichungsnummer der früheren Anmeldung nach Art. 76 EPÜ: **0 013 416**

(54) **Polymerisate von alpha,beta-ungesättigten N-substituierten Carbonsäureamiden und ihre Verwendung als Sedimentations-, Flockungs-, Entwässerungs- und Retentionshilfsmittel.**

(30) Priorität: **27.12.78 DE 2856383**
**24.03.79 DE 2911642**

(43) Veröffentlichungstag der Anmeldung: **28.10.81 Patentblatt 81/43**

(45) Bekanntmachung des Hinweises auf die Patenterteilung: **04.09.85 Patentblatt 85/36**

(84) Benannte Vertragsstaaten: **AT BE CH DE FR GB IT LU NL SE**

(56) Entgegenhaltungen:
**DE - A - 2 233 337**
**DE - A - 2 819 735**
**FR - A - 2 193 787**
**US - A - 3 856 689**
**US - A - 4 031 138**

**Die Akte enthält technische Angaben, die nach dem Eingang der Anmeldung eingereicht wurden und die nicht in dieser Patentschrift enthalten sind.**

(73) Patentinhaber: **Chemische Fabrik Stockhausen GmbH, Bäkerpfad 25, D-4150 Krefeld (DE)**

(72) Erfinder: **Goossens, Bernhard, Dipl.-Chem. Dr., Am Buschkothen 53, D-5620 Velbert (DE)**
Erfinder: **Küster, Erich, Dipl.-Chem. Dr., Alexanderplatz 15, D-4150 Krefeld (DE)**
Erfinder: **Dahmen, Kurt, Dipl.-Chem. Dr., Von-Velsen-Strasse 6, D-4050 Mönchengladbach 2 (DE)**
Erfinder: **Barthell, Eduard, Dipl.-Chem. Dr., Minkweg 18a, D-4150 Krefeld (DE)**

(74) Vertreter: **Klöpsch, Gerald, Dr.-Ing., An Gross St. Martin 6, D-5000 Köln 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 038 573 B1

**Beschreibung**

Gegenstand der Erfindung sind Polymerisate von α,β-ungesättigten N-substituierten Carbonsäureamiden der Formel I

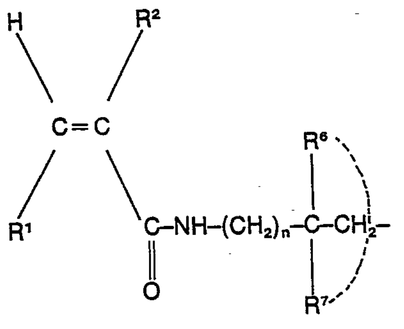

(X) (I)

wobei in der Formel I

$R^1$ bzw. $R^2$ Wasserstoff oder Methyl,

X Wasserstoff, den Rest eines Amins der Formel $-N(R^4)(R^5)$, wobei $R^4$ und $R^5$ für Alkylreste mit 1 bis 4 Kohlenstoffatomen oder Cycloalkylreste mit 3 bis 6 C-Atomen stehen oder eine Ammoniumgruppe der allgemeinen Formel

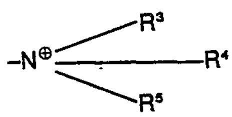

$A^{\ominus}$ (IV)

bedeutet, in der

$R^3$ Wasserstoff oder einen Alkylrest mit 1 bis 4 Kohlenstoffatomen darstellt,

$R^4$ bzw. $R^5$ die oben angegebene Bedeutung haben und

A ein salzbildendes Anion ist,.

$R^6$ bzw. $R^7$ Alkylgruppen, vorzugsweise niedere Alkylgruppen mit 1 bis 4 C-Atomen, insbesondere Methyl-, oder Arylgruppen sind, oder zusammen einen aliphatischen Ring, insbesondere den Cyclopentyl- oder Cyclohexylring bilden und

n eine Zahl von 1 bis 10 ist.

In der FR-A-2 193 787 (CALGON) ist ein Verfahren zur Entwässerung von Schlämmen unter Verwendung von kationischen, wasserlöslichen Polymeren beschrieben. Bei diesen Polymeren handelt es sich um Polymere von N-(Alkylammonium)acrylamid und N-(Alkylamino)-acrylamid. Diese Polymere weisen am zur Alkylammoniumgruppe β-ständigen Kohlenstoffatom Wasserstoff auf. Sie sind den erfindungsgemässen Polymeren, die in β-Stellung keinen Wasserstoff haben, in ihrer Flockungswirkung drastisch unterlegen.

In der DE-A-2 233 337 sind Polymerisate von Amiden und ihre Verwendung als Flockungsmittel beschrieben. Diese weisen im Unterschied zu den erfindungsgemässen Polymerisaten am zur NH-Gruppe des Säureamids benachbarten Kohlenstoffatom keinen Wasserstoff sondern zwei Kohlenwasserstoffreste auf. In β-Stellung zur endständigen Amino- oder Alkylammoniumgruppe können diese Polymerisate Wasserstoff aufweisen und sind insoweit mit Polymerisaten der FR-A-2 193 787 vergleichbar.

In der US-A-3 856 689 (HOKE) werden öllösliche Copolymerisate von N-(1,1-Dimethyl-3-Dimethylaminopropyl)acrylamid mit Alkyl- oder Methacrylaten beschrieben. Diese Copolymerisate sind als Schmiermittelzusätze geeignet, welche gleichzeitig dispergierend und viskositätsmodifizierend wirken. Für die Copolymerisate gilt das gleiche wie für die als Flockungsmittel eingesetzten Copolymerisate der DE-A 2 233 337, dass sie in Nachbarstellung zur NH-Gruppe des Säureamids ein disubstituiertes Kohlenstoffatom aufweisen und in β-Stellung zur endständigen Aminogruppe bzw. Alkylammoniumgruppe Wasserstoff aufweisen können.

Die erfindungsgemässen Polymerisate, für die erfindungswesentlich ist, dass sie in β-Stellung zur endständigen Amino- bzw. Ammoniumgruppe keinen Wasserstoff aufweisen, sind den vorstehend beschriebenen Polymerisaten in ihrer Flockungswirkung überraschend überlegen. Diese Überlegenheit dürfte darauf zurückzuführen sein, dass die vorstehend beschriebenen Polymerisate aufgrund des in β-Stellung vorhandenen Wasserstoffs bei erhöhten Temperaturen, wie sie bei der Herstellung des Monomeren und des Polymeren vorliegen können, unter β-Eliminierung Amin abspalten, was zur Ausbildung einer Doppelbindung führt. Diese Doppelbindung kann zur Vernetzung und damit unerwünschten Molekülvergrösserung unter starkem Abfall der Löslichkeit und der Flokkungswirkung führen. Dieses Problem ist offensichtlich vor dem Prioritätszeitpunkt der vorliegenden Anmeldung noch nicht erkannt worden.

Die erfindungsgemässen Polymerisate sind durch Polymerisation der ungesättigten Ausgangsmonomeren der Formel I allein oder mit anderen polymerisierbaren Monomeren nach an sich bekannten Verfahren erhältlich.

Die erfindungsgemässen Polymerisate können Homopolymerisate oder Copolymerisate sein. Erfindungsgemässe Copolymerisate enthalten neben den Grundeinheiten, die sich von den Monomeren der Formel I ableiten, als Comonomere Styrol, Alphamethylstyrol, Vinylpyridin, Acrylnitril, Methacrylnitril, Acrylamid, Methacrylamid N-monosubstituiertes Acryl- oder Methacrylamid, N-disubstituiertes Acryl- oder Methacrylsäureamid, Acrylester, Methacrylester, Acrylsäure, Methacrylsäure, Vinylester, Vinylether, Fumarsäure, Maleinsäure, Divinylbenzol, Methylenbisacrylamid oder Acrylallylester.

Die Zusammensetzung der erfindungsgemässen Copolymerisate kann in weiten Grenzen schwanken. Erfindungsgemässe Copolymerisate können vergleichsweise geringe Mengen an Monomeren der Formel I, zum Beispiel 5 Gew.-% enthalten, während der Rest, zum Beispiel 95 Gew.-%, aus anderen Comonomeren besteht. Anderseits fallen unter die Erfindung aber auch Copolymerisate mit hohen Anteilen an Monomeren der Formel I von beispielsweise 50 bis 95 Gew.-% und 50 bis 5 Gew.-% an anderen Comonomeren. Bevorzugte Copolymerisate bestehen zu 5 bis 60, insbesondere 10 bis 50 Gew.-% aus Monomeren, das heisst ungesättigten Carbonsäureamiden der

Formel I und 95 bis 40, insbesondere 90 bis 50 Gew.-%, an anderen Comonomeren, wobei als Comonomere Acryl- oder Methacrylsäurederivate wie Acrylamid und Methacrylamid oder Acryl- oder Methacrylsäureester bevorzugt sind.

Die Herstellung erfolgt nach bekannten Polymerisationsverfahren: Die Polymerisation kann thermisch, photochemisch, mit Strahlen oder mit den üblichen radikalischen Initiatoren ausgelöst werden. Hierzu kann die Polymerisation in Lösung, Suspension oder Emulsion durchgeführt werden.

Geeignete Initiatoren sind unter anderem anorganische Peroxide, wie zum Beispiel Wasserstoffperoxid oder organische Hydroperoxide und Peroxide, wie zum Beispiel tert.-Butyl-Cumolhydroperoxid oder Dibenzoylperoxid, in Radikale zerfallende aliphatische Azoverbindungen, wie zum Beispiel 2,2'-Azo-bis-isobuttersäurenitril, Redoxkatalysatorsysteme, wie die Systeme Persulfat oder Chlorat mit Disulfit oder Eisen (II) salzen, ferner die als Radikalbildner bekannten Chelate von Übergangsmetallen. Die Initiatoren werden im allgemeinen in einer Menge von 0,001 bis 1 Gew.-% bezogen auf die Monomermenge, verwendet. Die optimale Menge und der optimal wirksame Initiator lassen sich durch Versuche leicht ermitteln.

Die Polymerisation wird vorteilhaft in Gegenwart eines Lösungs- oder Verdünnungsmittels durchgeführt. Die bei anderen Monomeren üblichen Suspensions-, Lösungs- oder Emulsionspolymerisationsverfahren sind auch für die erfindungsgemässen Polymerisate geeignet. Gegebenenfalls können Hilfsmittel, wie Puffersubstanzen, Dispergiermittel, Schutzkolloide und dergleichen verwendet werden.

Die Ausgangsmonomeren der Formel I lassen sich neutralisieren und/oder quarternieren; die aus diesen kationischen Monomeren hergestellten Polymerisate sind nicht nur hervorragende Flockungs- und Entwässerungshilfsmittel für die Abwasseraufbereitung und Hilfsmittel zur Verbesserung der Trockenfestigkeit und Nassfestigkeit von Papier sowie Retentionshilfsmittel, sondern lassen sich aufgrund ihrer Temperaturstabilität auch vorteilhaft als Viskositätsregler und Dispergiermittel in Schmierstoffen einsetzen.

Bei Polymerisation in Gegenwart definierter Mengen an Vernetzer lassen sich ferner Anionenaustauscherharze gewinnen.

Die erfindungsgemässen Polymerisate haben bei Anwendung als Flockungs- und Entwässerungshilfsmittel bevorzugt Molekulargewichte in der Grössenordnung von 5 bis 10 Mio. bei Verwendung als Papierhilfsmittel bevorzugt von etwa 1 bis 5 Mio. und bei den anderen beschriebenen Anwendungen von bevorzugt < 1 Mio.

Gegenstand der Erfindung ist daher ferner die Verwendung der erfindungsgemässen Polymerisate als Flockungs- und Sedimentationshilfsmittel, als Hilfsmittel für die Klärschlammentwässerung, als Hilfsmittel für die Entwässerung und Retention in der Papierproduktion, als Additive in Mineralölen sowie als Ionenaustauscher.

Die Ausgangsmonomeren der Formel I lassen sich nach einem nicht zur Erfindung gehörenden Verfahren durch Umamidierung von β-substituierten Carbonsäureamiden der allgemeinen Formel II

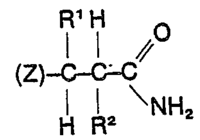

(II)

in der

$R^1$ und $R^2$ die weiter oben angegebene Bedeutung haben und

Z eine Hydroxigruppe oder den Rest eines Alkohols der Formel $R^8O-$ bedeuten, worin ferner $R^8$ für einen Alkylenrest mit 1 bis 4 Kohlenstoffatomen steht, mit primären Aminen der allgemeinen Formel III

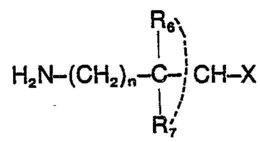

(III)

in der $R_6$, $R_7$, n und X die obige Bedeutung haben, und Umwandlung der entstandenen N-substituierten β-Hydroxi- bzw. β-Alkoxicarbonsäureamide durch Erhitzen in der Gasphase in Gegenwart von Katalysatoren herstellen.

Die Umwandlung der N-substituierten β-Hydroxi- bzw. β-Alkoxicarbonsäureamide in die α,β-ungesättigten N-substituierten Carbonsäureamide durch Dehydratisierung bzw. Alkoholabspaltung wird also nicht mehr in flüssiger Phase durchgeführt, sondern β-Hydroxi- bzw. β-Alkoxicarbonsäure werden zwecks Wasser- bzw. Alkoholabspaltung – zweckmässig auf schonende Weise – verdampft und die Dämpfe über einen festen Katalysator geleitet, der zweckmässig in einem beheizbaren Reaktionsrohr angeordnet ist. Zur schonenden Verdampfung wird vorteilhaft ein Vakuumverdampfer verwendet. Zur weiteren Schonung wird die Verdampfung gegebenenfalls unter Vakuum vorgenommen. Im Gegensatz zur Pyrolyse in flüssiger Phase, bei der der Sumpf längere Zeit thermisch beansprucht wird, ist die Verweilzeit im heissen Reaktionsrohr bei dieser Verfahrensweise sehr kurz, so dass die Gefahr von Nebenreaktionen wie Polymerisation oder Eigenreaktion des N-substituierten β-Hydroxicarbonsäureamids zum Polyester unter Abspaltung von Amin, die in flüssiger Phase bei hohen Temperaturen nicht ausgeschlossen werden kann, minimiert ist.

Die Umamidierung wird zweckmässig in einem Temperaturbereich von 100 bis 200 °C, gegebenenfalls unter Zusatz von katalytischen Mengen Säure vorgenommen. Es wurde gefunden, dass sich, insbesondere beim Einsatz von β-Alkoxicarbonsäureamiden, Essigsäure in einer Menge von 0,5 bis 1,0 Mol-% als Katalysator besonders gut eignet. Säureamid und Amin können ohne Lösungsmittelzusatz durch blosses Erhitzen zur Reaktion gebracht werden, wobei das Reaktionsgleichgewicht durch Abtreiben des entstehenden Ammoniaks in Richtung auf die gewünschten Produkte (= N-substituiertes β-Hydroxi- bzw. β-Alkoxisäureamid) verschoben wird.

Die Umamidierung kann auch unter Normaldruck ohne Katalysatorzusatz durchgeführt werden, wobei zur Einhaltung von Reaktionszeiten, die in der Grössenordnung um 6 Stunden liegen, Amine mit Siedepunkten oberhalb von 110 °C eingesetzt werden.

Bevorzugt werden Amine, die zudem mit der Schmelze des Säureamids eine homogene Phase bilden oder z.T. in der Schmelze des Säureamids löslich sind, bzw. selbst einen Teil des Säureamids lösen.

Geringeres gegenseitiges Lösungsvermögen kann zu einer anfänglichen Reaktionsverzögerung führen; mit fortschreitendem Umsatz steigt jedoch die Reaktionsgeschwindigkeit an, da das gebildete N-substituierte β-Hydroxi- bzw. β-Alkoxisäureamid als Lösungsvermittler dient und sich eine homogene Phase ausbildet. Vorteilhaft ist ein Zusatz von 5 bis 10% des jeweiligen N-substituierten β-Hydroxi- oder β-Alkoxicarbonsäureamids, um diese anfängliche Induktionsperiode zu überbrücken.

Das jeweilige Amin kann in einem Überschuss – bezogen auf Hydroxi- oder Alkoxiamid – eingesetzt werden.

Die Dehydratisierung bzw. Alkoholabspaltung wird bevorzugt in einem Bereich von 200 bis 400 °C durchgeführt; bei Aminogruppen enthaltenden β-Hydroxi- bzw. β-Alkoxicarbonsäureamiden erwiesen sich Temperaturen bis 250 °C als ausreichend.

Als Dehydratisierungskatalysatoren eignen sich besonders z.B. Metalloxide, wie Aluminiumoxid. Daneben sind auch Mischungen von Oxiden, wie z.B. Aluminiumoxid/Siliziumdioxid oder auch imprägnierte Träger, wie z.B. saures Aluminiumoxid oder mit Phosphorsäure imprägnierter Bims, oder auch Salze, wie Aluminiumphosphat oder Borphosphat geeignet. Als feste Katalysatoren für die Alkoholabspaltung eignen sich besonders anorganische Oxide mit saurem oder basischem Charakter, wie z.B. ebenfalls Aluminiumoxid, sowie Siliziumdioxid oder Bariumoxid, die gegebenenfalls noch mit Säuren, wie z.B. Phosphorsäure, oder Basen, wie z.B. Natriumhydroxid, imprägniert werden können.

Als β-Hydroxicarbonsäureamide werden für die Zwecke der Erfindung bevorzugt β-Hydroxipropyonsäureamid oder β-Hydroxibuttersäure eingesetzt.

Wenn X für den Rest eines Amins der Formel $-N(R^4)(R^5)$ steht, so können diese Reste $R^4$ und $R^5$, die gleich oder verschieden sind, für gerad- oder verzweigtkettige Alkylreste, beispielsweise Methyl, Ethyl, Propyl, Isopropyl oder n-Butyl, stehen oder auch Cycloalkylreste, wie z.B. Cyclopropyl, Cyclobutyl, Cyclopentyl oder Cyclohexyl, bedeuten.

In gleicher Weise steht Z in Formel (II) für den Rest eines Alkohols der Formel $R^8O-$, wobei $R^8$ ein gerad- oder verzweigtkettiger Alkylrest, beispielsweise Methyl, Ethyl, Propyl, Isopropyl oder n-Butyl, sein kann.

Beispiele für Amine sind Amine vom Typ des N',N',2,2-Tetramethylpropylendiamins-1,3 (Dimethylaminoneopentylamin) (Formel III, $n = 1$, $R^6 = R^7 = CH_3$) insbesondere also:

3-Dimethylamino-2,2-dimethylpropylamin

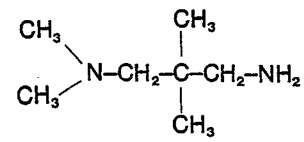

3-Di ethylamino-2,2-dimethylpropylamin

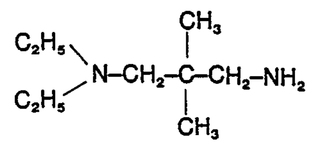

3-Dibutylamino-2,2-dimethylpropylamin

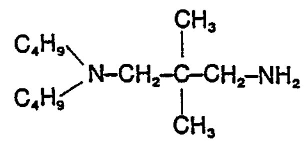

4-Dimethylamino-3,3-dimethylbutylamin-1

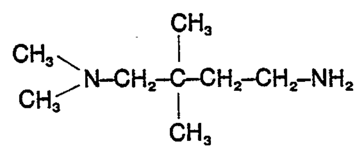

5-Dimethylamino-4,4-dimethylpentylamin-1

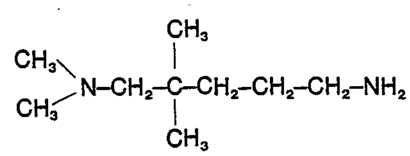

5-Diethylamino-4,4-dimethylpentylamin-1

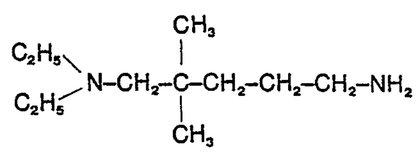

3- Dimethylamino-2-ethyl-2-methylpropylamin

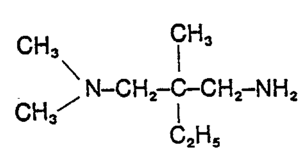

3-Dimethylamino-2-methyl-2-phenylpropylamin

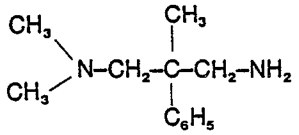

und 3-Dimethylamino-2-ethyl-2-butyl-propylamin

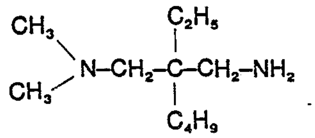

sowie 1-(Aminomethylen)-1-(dimethylaminomethylen)-cyclohexen

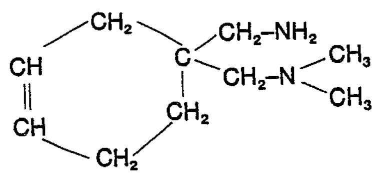

In diesen Aminen trägt das zur tertiären Aminogruppe β-ständige Kohlenstoffatom kein Wasserstoff mehr, sondern ist statt dessen alkylsubstituiert. Diese Amine der allgemeinen Formel III tragen an dem zum tertiären Stickstoff β-ständigen Kohlenstoff keine Wasserstoffatome, sodass bei den unter Verwendung dieser Amine hergestellten Reaktionsprodukten keine temperaturbedingte β-Eliminierung von Amin erfolgen kann. Diese Aminabspaltung, die bei monomeren α,β-Doppelbindung zu einer weiteren end-ständigen Doppelbindung führen würde, ist im Hinblick auf die Verwendung der monomeren Säureamide zur Herstellung von wasserlöslichen Polymerisaten äusserst unerwünscht, da diese Doppelbindung für unerwünschte Vernetzung zur Verfügung stünde.

Durch geeignete Wahl der β-Substituenten lassen sich überdies die Hydrophilie bzw. Hydrophobie der Monomeren und der aus diesen erzeugten Polymeren je nach Anwendungszweck modifizieren.

Herstellung der Monomeren.

Beispiel 1:
N-(N′,N′,2′,2′-Tetramethylaminopropyl)-acrylamid: ($\overset{1}{=}$ TEMAPA)

471 g β-Hydroxapropionamid und 722 g N,N,2,2-Tetramethylpropylendiamin-1,3 wurden 7 Stunden über ein Temperaturintervall von 140 bis 160 °C bis zum Ende der Ammoniakentwicklung erhitzt. Die anschliessende Destillation mittels eines Dünnschichtverdampfers lieferte 1058 g β-Hydroxy-N-(N′,N′,2′,2′-tetramethylaminopropyl)-propionsäureamid, Kp 206 °C/10 torr.

NMR: ($CDCl_3$) δ = 0,9 (s,6); 2,25 (s,2); 2.3 (s,6); 2.45 (t,2); 3.2 (d,2); 3.9 (t,2)

917 g des Hydroxyproduktes wurden sukzessiv im Dünnschichtverdampfer verdampft (230 °C Verdampfertemperatur, Vakuum 10 mbar) und die Dämpfe durch ein Reaktionsrohr geleitet, das mit 700 g Aluminiumoxid gefüllt und auf 220 °C geheizt war. Während des 3,5stündigen Prozesses wurden 727 N-(N′,N′,2′,2′-Tetramethylaminopropyl)-acrylamid gewonnen. Kp 137 °C/10 mb.

NMR: ($CDCl_3$) δ = 0,9 (s,6); 2.3 (m,8); 3,25 (d,2); 5.4–6.2 (m,3); (siehe Anhang, Fig. 1).

Beispiel 2:
N-(N′,N′,2,2-Tetramethyl-3-aminopropyl)-3-methoxipropionamid

Man erhitzt 412,5 g (4,0 Mol) 3-Methoxipropionamid mit 547 g (4,2 Mol) N,N,2,2-Tetramethylpropandiamin-1,3 und 4 ml Eisessig 8 Stunden über ein Temperaturintervall von 145 bis 170 °C bis zum Ende der Ammoniakentwicklung. Die anschliessende Destillation im Hochvakuum liefert 820 g (3,8 Mol = 95% d.Th.) farblose Flüssigkeit mit $Kp_{0,2}$ = 105 bis 108 °C.

NMR (in $CCl_4$): δ = 0,9 (s,6); 2,0 bis 2,5 (m,10); 3,05 (d,2); 3,3 (s,3); 3,55 (t,2); 7,40 (m,1).

N-(N′,N′,2,2-Tetramethyl-3-aminopropyl)-acrylamid

Einem auf 170 bis 180 °C geheizten Verdampferkolben führt man kontinuierlich insgesamt 820 g (3,8 Mol) N-(N′,N′,2,2-Tetramethyl-3-aminopropyl)-3-methoxipropionamid zu und leitet die Dämpfe unter einem Vakuum von 14 mbar in ein mit Aluminiumoxid in Kugelform, das mit 10% Natriumhydroxid imprägniert ist, gefülltes Reaktionsrohr (100 cm lang, 3 cm ∅), das von aussen mit einer Heizbandage auf 300 °C geheizt ist. Bei einer Kopftemperatur von 150 bis 220 °C werden im Laufe von 2 Stunden etwa 475 g eines gelben Öles aufgefangen, das zur weiteren Reinigung nochmals im Hochvakuum destilliert wird. Man erhält 383 g (2,1 Mol = 52% d.Th., bezogen auf 3-Methoxipropionamid) Produkt mit $Kp_{0,2}$ = 98 bis 102 °C.

NMR (in $CCl_4$): δ = 0,9 (s,6); 2,1 (s,2); 2,3 (s,6); 3,15 (d,2); 5,3 bis 6,5 (m,3); 8,0 (m,1).
(siehe Anhang Fig. 1)

Beispiel 3:
N-(N′,N′,2,2-Tetramethyl-3-aminopropyl)-2-methyl-3-methoxipropionamid

Nach der Arbeitsweise von Beispiel 2 erhält man aus 468,6 g (4,0 Mol) 2-Methyl-3-methoxipropionamid 857 g (3,7 Mol = 93% d.Th.) farblose Flüssigkeit mit $Kp_{0,2}$ = 102 bis 106 °C.

NMR (in $CCl_4$): δ = 0,9 (s,6); 1,05 (d,3); 2,0 bis 2,7 (m,9); 3,05 (d,2); 3,2 bis 3,6 (m,5); 7,3 (m,1).

N-(N′,N′,2,2-Tetramethyl-3-aminopropyl)-methacrylamid ($\overset{1}{=}$ TEMAPMA)

Entsprechend Beispiel 2 entstehen aus 857 g (3,7 Mol) Vorprodukt 510 g Produkt. Bei der Destillation im Hochvakuum resultieren 420 g (2,1 Mol = 53% d.Th., bezogen auf 2-Methyl-3-methoxipropionamid) mit $Kp_{0,2}$ = 92 bis 94 °C.

NMR (in $CCl_4$): δ = 0,9 (s,6); 1,9 (d,3); 2,2 (s,2); 2,3 (s,6); 3,1 (d,2); 5,1 bis 5,7 (m,2); 8,0 (m,1).
(siehe Anhang Fig. 2)

Beispiel 4:
N-(N',N',2',2'-Tetramethylaminopropyl)-crotonsäureamid:

412 g β-Hydroxybuttersäureamid und 546 g N,N,2,2-Tetramethylpropylendiamin-1,3 wurden 16 Stunden über ein Temperaturintervall von 148 bis 160 °C erhitzt. 829 g des Reaktionsproduktes wurden sukzessiv mittels eines Dünnschichtverdampfers (250 °C/10 mb) als Dampf einem Reaktionsrohr zugeführt, das 700 g Aluminiumoxid enthielt und auf 220 °C geheizt war. Während des vierstündigen Prozesses wurden 543 g N-(N',N',2',2'-Tetramethylaminopropyl)crotonsäureamid erhalten. Lip 102 °C/0,035 mb.

NMR: ($CDCl_3$) δ = 0,9 (s,6); 1.9 (dd,3); 2.15–2.6 (m,8); 3.35 (m,2); 5.6–7.0 (m,2)
(siehe Anhang Fig. 3)

Beispiel 5:
N-(N',N',2,2-Tetramethyl-3-aminopropyl)-3-methoxibuttersäureamid

Nach der Arbeitsweise von Beispiel 2 erhält man aus 468,6 g (4,0 Mol) 3-Methoxibuttersäureamid 800 g (3,5 Mol = 87% d.Th.) hellgelbe Flüssigkeit mit $Kp_{0,2}$ = 112 bis 114 °C.

NMR (in $CDCl_3$): δ = 0,9 (s,6); 1,15 (d,3); 2,0 bis 2,5 (m,10); 3,1 (d,2); 3,35 (s,3); 3,7 (q,1); 7,7 (m,1).

N-(N',N',2,2-Tetramethyl-3-aminopropyl)-crotonsäureamid

Entsprechend Beispiel 2 entstehen aus 800 g (3,5 Mol) Vorprodukt 587 g Produkt, die nach Destillation im Hochvakuum 516 g (2,6 Mol = 65% d.Th.), bezogen auf 3-Methoxibuttersäureamid) hellgelbes, viskoses Öl mit $Kp_{0,2}$ = 104 bis 108 °C ergeben.

NMR (in $CCl_4$): δ = 0,9 (s,6); 1,8 (dd,3); 2,1 (s,2); 2,3 (s,6); 5,6 bis 7,0 (m,2); 7,6 (m,1).

In Analogie zu den Beispielen 1 bis 5 werden durch Umsetzung der entsprechenden Amine mit den entsprechenden β-Hydroxy- bzw. β-Methoxycarbonsäureamiden in Moläquivalenten Mengen erhalten:

6.) N-(3-Diethylamino-2,2-dimethylpropyl)-acrylamid
Kp. 110 °C/0.1 mb,
NMR s. Anhang (Fig. 4)

7.) N-(3-Diethylamino-2,2-dimethylpropyl)-methacrylamid
Kp. 117 °C/0.1 mb,
NMR s. Anhang (Fig. 5)

8.) N-(3-Diethylamino-2,2-dimethylpropyl)crotonamid
Kp. 113 °C/0.035 mb,
NMR s. Anhang (Fig. 6)

9.) N-(3-Dibutylamino-2,2-dimethylpropyl)acrylamid
Kp. 155 °C/0.09 mb,
NMR s. Anhang (Fig. 7)

10.) N-(3-Dibutylamino-2,2-dimethylpropyl)methacrylamid
Kp. 125 °C/0.032 mb,
NMR s. Anhang (Fig. 8)

11.) N-(3-Dibutylamino-2,2-dimethylpropyl)crotonamid
Kp. 129 °C/0.03 mb,
NMR s. Anhang (Fig. 9)

12.) N-(4-Dimethylamino-3,3-dimethylbutyl)-acrylamid
Kp. 107 °C/0.08 mb,
NMR s. Anhang (Fig. 10)

13.) N-(4-Dimethylamino-3,3-dimethylbutyl)-methacrylamid
Kp. 113 °C/0.14 mb,
NMR s. Anhang (Fig. 11)

14.) N-(4-Dimethylamino-3,3-dimethylbutyl)-crotonamid
Kp. 120 °C/0.03 mb,
NMR s. Anhang (Fig. 12)

15.) N-(5-Dimethylamino-4,4-dimethylpentyl)-acrylamid
Kp. 127 °C/0.03 mb,
NMR s. Anhang (Fig. 13)

16.) N-(5-Dimethylamino-4,4-dimethylpentyl)-methacrylamid
Kp. 127 °C/0.04 mb,
NMR s. Anhang (Fig. 14)

17.) N-(5-Dimethylamino-4,4-dimethylpentyl)-crotonamid

18.) N-(5-Diethylamino-4,4-dimethylpentyl)-acrylamid
Kp. 130 °C/0.06 mb,
NMR s. Anhang (Fig. 16)

19.) N-(5-Diethylamino-4,4-dimethylpentyl)-methacrylamid
Kp. 132 °C/0.035 mb,
NMR s. Anhang (Fig. 17)

20.) N-(3-Dimethylamino-2-ethyl-2-methylpropyl)acrylamid
Kp. 98 °C/0.03 mb,
NMR s. Anhang (Fig. 18)

21.) N-(3-Dimethylamino-2-ethyl-2-methylpropyl)methacrylamid
Kp. 98 °C/0.06 mb,
NMR s. Anhang (Fig. 19)

22.) N-(3-Dimethylamino-2-methyl-2-phenylpropyl)acrylamid
Kp. 128 °C/0.06 mb,
NMR s. Anhang (Fig. 20)

23.) NMR ($CCl_4$) von 1-(Acrylamidomethylen)-1-dimethylaminomethylen-cyclohexen,
Kp. 122 °C/0.04 mb (Fig. 27)

24.) NMR ($CCl_4$) von 1-(Methacrylamidomethylen)-1-dimethylaminomethylen-cyclohexen,
Kp. 122 °C/0,05 mb, (Fig. 28)

Die auf die vorstehend beschriebene Art hergestellten Aminoverbindungen lassen sich durch Umsetzung mit einer geeigneten Säure (z.B. Schwefelsäure) in die entsprechenden Aminsalze überführen oder können mit einem geeigneten Alkylhalogenid oder Alkylsulfat quarterniert werden. Dies wird in nachfolgenden Beispielen erläutert.

Beispiel 25:
Trimethyl-3-(1-acrylamido-2,2-dimethylpropyl)-ammoniummethosulfat:

Einer Lösung von 289,5 g N-(N',N',2',2'-Tetramethylaminopropyl)-acrylamid in 317 g Wasser werden unter Rühren und Eiskühlung 185,4 g Dimethylsulfat innerhalb von 2,5 Stunden zugetropft. Nach 3stündiger Nachreaktion wird eine 60% Lösung des quartären Produktes erhalten.

Beispiel 26:
(3-Acrylamido-2,2-dimethylpropyl)-trimethylammoniumchlorid:

Einer Lösung von 376 g N-(3-Dimethylamino-2,2-dimethylpropyl)-acrylamid = TEMAPA von Beispiel 1 in 320 g Wasser werden unter starkem Rühren bei 80 °C 103 g Methylchlorid innerhalb von 3,5 Stunden bei einem Arbeitsdruck von 0.4 bar aufgedrückt. Es wird eine wässrige Lösung des quartären Produktes erhalten.

Die Acrylamidoverbindungen der Erfindung lassen sich entweder allein oder mit anderen polymerisierbaren Monomeren unter Bildung von Copolymeren oder anderen Unterpolymerisaten polymerisieren:

Erfindungsgemässe Polymerisate.

Beispiel 27:
Homopolymerisat TEMAPA · ½ $H_2SO_4$:

160 g N-(N',N',2',2'-Tetramethylaminopropyl)-acrylamid wurden in 85 g Wasser gelöst und mit 199,5 g 20%iger Schwefelsäure sauer gestellt. Die Lösung wurde auf 55 °C aufgeheizt und die Polymerisation durch Zugabe von 80 mg Azobisisobutyronitril ausgelöst. Nach 2stündigem Stehen wurde das gelartige Polymerisationsprodukt zerkleinert, getrocknet und zu einem weissen Pulver zermahlen. Restmonomerengehalt 0,72%, Viskosität (1% wässrige Lösung) 184 m. Pa.s.

NMR und IR siehe Anhang (Fig. 21 und 22).

Beispiel 28:
Copolymerisat TEMAPA · ½ $H_2SO_4$/Acrylamid:

80 g N-(N',N',2',2'-Tetramethylaminopropyl)-acrylamid wurden in 386 Wasser gelöst und mit 100 g 20%iger Schwefelsäure sauer gestellt. Nach Zusatz von 100 g Acrylamid wurde die Lösung auf 55 °C aufgeheizt und die Polymerisation mit 80 mg Azobisisobutyronitril gestartet. Nach 3stündigem Stehen wurde das gelartige Copolymerisationsprodukt zerkleinert, getrocknet und zu einem weissen Pulver zermahlen. Restmonomerengehalt: 0,7%, Viskosität (1% wässrige Lösung) 1200 m. Pa.s.

Beispiel 29:
Homopolymerisat aus TEMAPA · $CH_3Cl$:

200 g TEMAPA · $CH_3Cl$ wurden in 380 g Wasser gelöst und auf pH 4 eingestellt. Nach Ausblasen mit Stickstoff wurde die Polymerisation durch Zusatz von 3 mg Kaliumperoxodisulfat, 2 mg Natriumdisulfit, 0,2 mg Eisen(II)sulfat und 30 mg 2,2'-Azobis-(2-amidinopropan)-dihydrochlorid = AIBA ausgelöst. Das erhaltene Gel wurde bis auf einen Restwassergehalt von 10% getrocknet und gemahlen. Grenzviskosität (10%ige Kochsalzlösung): 387,5 ml/g.

Beispiel 30:
Copolymerisat aus Acrylamid (78 Gew.-%) und TEMAPA · ½ $H_2SO_4$ (22 Gew.-%):

234 g Acrylamid und 66 g TEMAPA · ½ $H_2SO_4$ wurden in 700 g Wasser mit 30 mg AIBA versetzt und nach Durchleiten von Stickstoff 30 min mit einer Lampe (OSRAM HWL 250 watt) bestrahlt. Das erhaltene Gel wurde bis auf einen Restwassergehalt von 11% getrocknet und gemahlen. Grenzviskosität (10%ige Kochsalzlösung): 1640 ml/g.

NMR s. Anhang (Fig. 23 und 24).

AIBA = Azo-bis-(isobutyramidin-hydrochlorid).

Beispiel 31:
Homopolymerisat aus N-(N',N',2,2-Tetramethyl-3-aminopropyl)-methacrylamid · ½ $H_2SO_4$ (TEMAPMA · ½ $H_2SO_4$)

80 g TEMAPMA wurden in 40 g Wasser dispergiert und mit 100 g 20%iger Schwefelsäure neutralisiert, sauerstofffrei geblasen und nach Zugabe von 100 mg AIBA eine Stunde bestrahlt (OSRAM HWL 250 watt).

Brookfield-Viskosität des getrockneten Polymerisates: (1%ige wässrige Lösung): 240 mPas, NMR s. Anhang (Fig. 25).

Beispiel 32:
Copolymerisat aus Acrylamid (75 Gew.-%) und TEMAPMA · ½ $H_2SO_4$ (25 Gew.-%):

150 g Acrylamid wurden in 470 g Wasser gelöst, 40 g TEMAPMA zugefügt und mit 50 g 20%iger Schwefelsäure neutralisiert. Nach Zugabe von 25 mg AIBA (Azo-bis-(isobutyramidin-hydrochlorid)) wurde sauerstofffrei geblasen und 30 min belichtet (OSRAM HWL 250 watt). Das erhaltene Gel wurde getrocknet und gemahlen; Brookfield-Viskosität (1%ige wässrige Lösung): 3800 mPas, NMR s. Anhang (Fig. 26).

Beispiel 33:

Die verfahrensgemäss hergestellten Produkte wurden als Sedimentationsmittel in Flockungsversuchen getestet. Durch Bestimmung der Sedimentationsgeschwindigkeit wurde das Flockungsverhalten von Copolymerisaten nach Beispiel 30 und 32 in wässriger Lösung nach Zusatz zu wässrigen Tonsuspensionen, die durch Aufschlämmen von Kaolin in Wasser in der üblichen Weise hergestellt worden waren und mit $Al_2(SO_4)$-Lösung auf einen pH-Wert von ca. 4,8 eingestellt wurden, geprüft. Die Ergebnisse sind in Tabelle I dargestellt:

Tabelle I

| Produkt | Zeit | (Sek.) |
|---|---|---|
| ohne | | 180 |
| nach Beisp. | 30 | 2,5 |
| nach Beisp. | 32 | 4,3 |

Tabelle I: Flockungseffekt auf eine Tontrübe mit 20 g/l Feststoffgehalt mit $Al_2(SO_4)$-Zusatz, Produkt in 0,1%iger Lösung; Konzentration 2 ppm.

Zur Versuchsausführung vgl.: H. Aykel/M. Neven: Chemie-Ing.-technik 39 (1967) 172.

Weiterhin lassen sich die beschriebenen Produkte bei der Entwässerung von Kommunalschlämmen einsetzen.

Entwässerungsversuch mit Faulschlamm: Feststoffgehalt: 3,7%,

| Entwässerungs-mittel: | Zugabemenge ($g/cm^3$) | Feststoff im Abwurf (%) | Zentrat Aussehen | Extinkt. (× 100) |
|---|---|---|---|---|
| Produkt nach Beispiel 30 | 190 | 26,4 | weiss | 20 |
| Produkt nach Beispiel 32 | 200 | 25,8 | weiss | 20 |

Beispiel 34:

Die nach Beispiel 30 und 32 hergestellten Copolymerisate wurden ferner auf ihre Einsetzbarkeit als Entwässerungshilfsmittel und Retentionshilfsmittel für die Papiererzeugung getestet:

a) Entwässerung:

Prüfgerät und Prüfmethode:

Als Prüfgerät wird der Schopper-Riegler-Mahlgradprüfer (SR-Gerät) verwendet. Zur Messung der Entwässerungsdauer einer Stoffsuspension lässt man den Überlauf gemeinsam mit dem Düsenauslauf in den Messzylinder des Gerätes einlaufen und bestimmt die Entwässerungsdauer $^tE$ in Sekunden für 600 ml des Siebwassers. Der Mahlgrad des Stoffes sollte nach Möglichkeit nicht unter 55° SR liegen. Die Stoffsuspension enthält, wie unter Standardbedingungen für die SR°-Messung, 2 g atro/l.

Faserstoffsuspension:

Im vorliegenden Fall wurden 400 g Rotopapier in 20 l Wasser aufgeschlagen und 2 Stunden im Valley-Holländer bei geringer Belastung auf 55 bis 57° SR gemahlen.

Prüfergebnisse:

O-Probe (ohne Zusatz): $^tE$ = 44 sek.

| Dosierung (%) | Produkt | $^tE$ (sek.) |
|---|---|---|
| 0,2 | nach Beispiel 30 | 22 |
| 0,4 | | 13 |
| 0,2 | nach Beispiel 32 | 18 |
| 0,4 | | 14 |

b) Retention:

Prüfmethode:

Füllstoffretention: im RK-Blattbildner
im SR-Gerät

Die Prüfblätter für den Blattbildner wurden auf ein Flächengewicht von 100 $g \cdot m^{-2}$ festgelegt und die Papierstoffmenge im SR-Gerät auf 2,0 g atro.

Der Retentionseffekt im Blattbildner wurde nach dem Ascherest, bezogen auf den Füllstoffzusatz, bewertet. Zur Prüfung der Retention im SR-Gerät ist der Trübungswert in 600 ml des abfliessenden Wassers mit dem Lange-Kolorimeter gemessen worden.

3. Prüfergebnisse:

3.1 Retention im Blattbildner:

Dosierung: 0,02% Retentionsmittel/Stoff

| Füllstoff-Zusatz % | Retention (%) ohne | Produkt Beispiel 26 | Produkt Beispiel 28 |
|---|---|---|---|
| 10 | 30,4 | 87,0 | 85,2 |
| 20 | 35,2 | 85,1 | 83,2 |
| 30 | 33,0 | 83,4 | 73,8 |
| 40 | 33,3 | 82,3 | 79,8 |

3.2 Retention im SR-Gerät:

Dosierung: 0,02% Retentionsmittel/Stoff

| Füllstoff-Zusatz (%) | Absorption (%) ohne | Produkt Beispiel 26 | Produkt Beispiel 28 |
|---|---|---|---|
| 20 | 27,0 | 0,5 | 2,0 |
| 40 | 65,5 | 10,0 | 14,0 |
| 60 | 80,0 | 25,0 | 30,0 |

Beispiel 35:
Copolymerisat TEMAPA/Dodecylmethacrylat
(90 : 10 Gew.-%)

23,33 g TEMAPA und 210 g Dodecylmethacrylat wurden mit 0,1167 g Dodecylmercaptan in 116,67 g Neutralöl (BP ENERTHENE 1269®) auf 80 °C erhitzt und durch dosierte Zugabe von insgesamt 1,2 g AIBN (Azo-bis-(isobutyronitril)) über einen Zeitraum von 5 Stunden polymerisiert. 2 Teile des resultierenden hochviskosen Reaktionsprodukts wurden mit weiteren 98 Teilen BP-ENERTHENE 1269 vermischt und für die nachstehend beschriebenen Untersuchungen verwendet:

AIBN = Azo-bis-(isobutyronitril)

Beispiel 36:
Copolymerisat TEMAPMA/Dodecylmethacrylat
(10 : 90 Gew.-%)

Analog zu Beispiel 35 wurde eine Mischung eines Copolymerisats von TEMAPMA/Dodecylmethacrylat in Neutralöl hergestellt.

Der Einfluss obiger Copolymerisate auf die Viskosität des Neutralöls wurde durch Ermittlung des Viskositätsindex nach ASTM D 2270-77 festgestellt; ferner wurde die Dispergiereigenschaft obiger Copolymerer anhand des Sedimentationsverhaltens von Kohlenstaub-Suspension in Neutralöl getestet:

| | Viskosität (cSt) 40°C | 100°C | VIE | % Kohle noch dispergiert nach 4 Tg. Standzeit |
|---|---|---|---|---|
| BP-ENERTHENE 1269 ohne Additiv | 4,29 | 1,48 | 79 | 50% |
| BP-ENERTHENE 1269 mit Additiv (Prod. nach Beispiel 31) | 6,763 | 2,353 | ~168 | 100% |
| BP-ENERTHENE 1269 mit Additiv (Prod. nach Beispiel 32) | 6,985 | 2,403 | ~168 | 100% |

Beispiel 37:
Homopolymerisat aus TEMAPA, vernetzt mit 1,3-Dibrom-propan

73,7 g TEMAPA und 40,4 g 1,3-Dibrompropan wurden in 50 g Wasser 6 Stunden bei 90 °C gerührt, anschliessend wurde auf 40 °C abgekühlt und durch Zugabe von 0,5 g Kaliumperoxodisulfat die Polymerisation ausgelöst. Das erhaltene vernetzte Polymerisat wurde bis auf einen Restwassergehalt von 10% getrocknet, zerkleinert und auf ionenaustauschende Eigenschaften getestet. Ionenaustauscherkapazität: 3,1 mval/g ($Br^-$-Form).

**Patentansprüche für die Vertragsstaaten BE, CH, DE, FR, GB, IT, LU, NL, SE**

1. Polymerisate von α,β-ungesättigten N-substituierten Carbonsäureamiden der Formel I

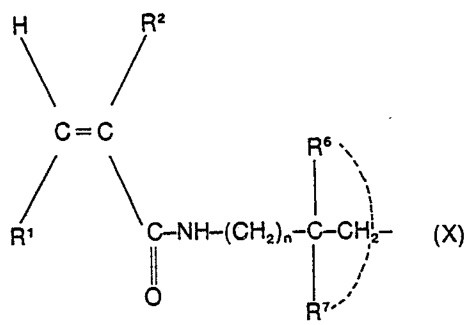

(I)

wobei

$R^1$ bzw. $R^2$ Wasserstoff oder Methyl,

X Wasserstoff, den Rest eines Amins der Formel $-N(R^4)(R^5)$, wobei $R^4$ und $R^5$ für Alkylreste mit 1 bis 4 Kohlenstoffatomen oder Cycloalkylreste mit 3 bis 6 C-Atomen stehen oder eine Ammoniumgruppe der allgemeinen Formel

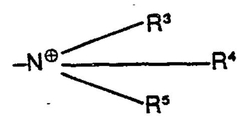

$A^\ominus$ (IV)

bedeutet, in der

$R^3$ Wasserstoff oder einen Alkylrest mit 1 bis 4 Kohlenstoffatomen darstellt,

$R^4$ bzw. $R^5$ die oben angegebene Bedeutung haben und

A ein salzbildendes Anion ist,

$R^6$ bzw. $R^7$ Alkylgruppen, vorzugsweise niedere Alkylgruppen mit 1 bis 4 C-Atomen, insbesondere Methyl- oder Arylgruppen sind, oder zusammen einen aliphatischen Ring, insbesondere den Cyclopentyl- oder Cyclohexylring bilden und

n eine Zahl von 1 bis 10 ist.

2. Polymerisate von α,β-ungesättigten N-substituierten Carbonsäureamiden der Formel I, erhältlich durch Polymerisation der ungesättigten Ausgangsverbindung allein oder mit anderen polymerisierbaren Monomeren nach an sich bekannten Verfahren.

3. Homopolymerisate nach Anspruch 1 oder 2.

4. Copolymerisate nach Anspruch 1 oder 2 aus Monomeren der Formel I sowie Styrol, α-Methylstyrol, Vinylpyridin, Acrylnitril, Methacrylnitril, Acrylamid, Methacrylamid, N-monosubstituiertem Acryl- oder Methacrylamid, N-disubstituiertem Acryl- oder Methacrylsäureamid, Acrylester, Methacrylester, Acrylsäure, Methacrylsäure, Vinylester, Vinylether, Fumarsäure, Maleinsäure, Divinylbenzol, Methylenbisacrylamid oder Acrylalylester.

5. Copolymerisate nach Anspruch 4, dadurch gekennzeichnet, dass sie zu 5 bis 60, insbesondere 10 bis 50 Gew.-% aus Monomeren der Formel I und zu 95 bis 40, insbesondere 90 bis 50 Gew.-% aus Comonomeren nach Anspruch 4, insbesondere Acrylamid, bestehen.

6. Verwendung der Homo- und Copolymerisate nach Ansprüchen 1 bis 5 als Flockungs- und Sedimentationshilfsmittel, als Hilfsmittel für die Klärschlammentwässerung, als Hilfsmittel für die Entwässerung und Retention in der Papierproduktion, als Additive in Mineralölen sowie als Ionenaustauscher.

**Patentanspruch für den Vertragsstaat AT**

Verwendung von Homo- und Copolymerisaten von α,β-ungesättigten N-substituierten Carbonsäureamiden der Formel

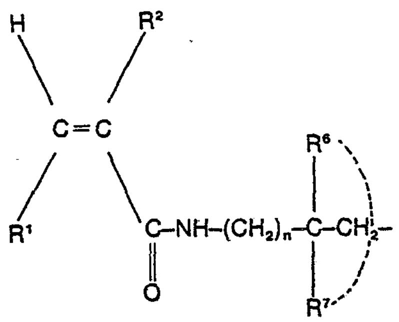

(I)

(X)

wobei

$R^1$ bzw. $R^2$ Wasserstoff oder Methyl

X Wasserstoff, den Rest eines Amins der Formel $-N(R^4)(R^5)$, wobei $R^4$ und $R^5$ für Alkylreste mit 1 bis 4 Kohlenstoffatomen oder Cycloalkylreste mit 3 bis 6 C-Atomen stehen, oder eine Ammoniumgruppe der allgemeinen Formel IV

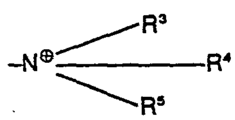

$A^{\ominus}$ (IV)

bedeutet, in der

$R^3$ Wasserstoff oder einen Alkylrest mit 1 bis 4 Kohlenstoffatomen darstellt,

$R^4$ bzw. $R^5$ die oben angegebene Bedeutung haben und

A ein salzbildendes Anion ist,

$R^6$ bzw. $R^7$ Alkylgruppen, vorzugsweise niedere Alkylgruppen mit 1 bis 4 C-Atomen, insbesondere Methyl- oder Arylgruppen sein können oder zusammen einen aliphatischen Ring, insbesondere den Cyclopentyl- oder Cyclohexylring bilden, und

n eine Zahl von 1 bis 10 ist, als Flockungs- und Sedimentationshilfsmittel, als Hilfsmittel für die Klärschlammentwässerung, als Hilfsmittel für die Entwässerung und Retention in der Papierproduktion, als Additive in Mineralölen sowie als Ionenaustauscher.

**Claims for the contracting states: BE, CH, DE, FR, GB, IT, LU, NL, SE.**

1. Polymers of α,β-unsaturated N-substituted carboxylic acid amides of the formula I

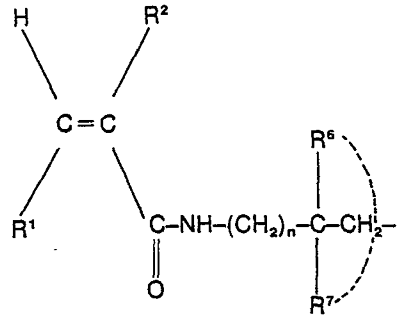

(I)

(X)

in which

$R^1$ and $R^2$ represent hydrogen or methyl,

X represents hydrogen, the radical of an amine of the formula $-N(R^4)(R^5)$ in which $R^4$ and $R^5$ represent alkyl radicals having from 1 to 4 carbon atoms or cycloalkyl radicals having from 3 to 6 carbon atoms, or an ammonium group of the general formula

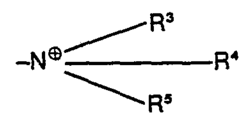

$A^{\ominus}$ (IV)

in which

$R^3$ represents hydrogen or an alkyl radical having from 1 to 4 carbon atoms,

$R^4$ and $R^5$ have the meanings given above, and

A represents a salt-forming anion,

$R^6$ and $R^7$ represent alkyl groups, preferably lower alkyl groups having from 1 to 4 carbon atoms, especially methyl or aryl groups, or together form an aliphatic ring, especially the cyclopentyl or cyclohexyl ring, and

n represents a number from 1 to 10.

2. Polymers of α,β-unsaturated N-substituted carboxylic acid amides of the formula I obtainable by polymerisation of the unsaturated starting compound alone or with other polymerisable monomers according to processes known per se.

3. Homopolymers according to claim 1 or 2.

4. Copolymers according to claim 1 or 2 comprising a monomer of the formula I and styrene, α-methylstyrene, vinylpyridine, acrylonitrile, methacrylonitrile, acrylamide, methacrylamide, N-monosubstituted acrylamide or methacrylamide, N-disubstituted acrylic acid or methacrylic acid amide, acrylic ester, methacrylic ester, acrylic acid, methacrylic acid, vinyl ester, vinyl ether, fumaric acid, maleic acid, divinylbenzene, methylene bisacrylamide or acrylallyl ester.

5. Copolymers according to claim 4, characterised in that they comprise from 5 to 60% by weight, especially from 10 to 50% by weight, of a monomer of the formula I and from 95 to 40% by weight, especially from 90 to 50% by weight, of a

comonomer according to claim 4, especially acrylamide.

6. Use of the homo- and co-polymers according to claims 1 to 5 as flocculation and sedimentation auxiliaries, as auxiliaries for sewage sludge dewatering, as auxiliaries for dewatering and retention in paper production, as additives in mineral oils and as ion exchangers.

**Claim for the Contracting state: AT**

Use of homo- and co-polymers of α,β-unsaturated N-substituted carboxylic acid amides of the formula

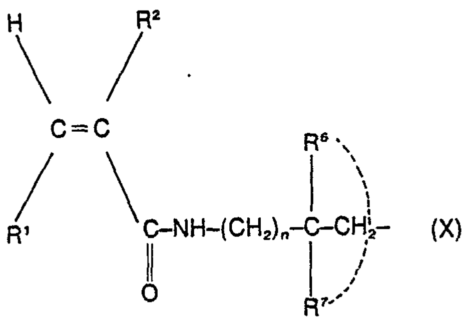

(I)

in which

$R^1$ and $R^2$ represent hydrogen or methyl,

X represents hydrogen, the radical of an amine of the formula $-N(R^4)(R^5)$ in which $R^4$ and $R^5$ represent alkyl radicals having from 1 to 4 carbon atoms or cycloalkyl radicals having from 3 to 6 carbon atoms, or an ammonium group of the general formula

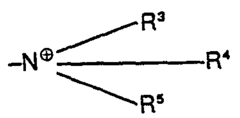 $A^{\ominus}$ (IV)

in which

$R^3$ represents hydrogen or an alkyl radical having from 1 to 4 carbon atoms,

$R^4$ and $R^5$ have the meanings given above, and

A represents a salt-forming anion,

$R^6$ and $R^7$ represent alkyl groups, preferably lower alkyl groups having from 1 to 4 carbon atoms, especially methyl or aryl groups, or together form an aliphatic ring, especially the cyclopentyl or cyclohexyl ring, and

n represents a number from 1 to 10, as flocculation and sedimentation auxiliaries, as auxiliaries for sewage sludge dewatering, as auxiliaries for dewatering and retention in paper production, as additives in mineral oils and as ion exchangers.

**Revendications pour les Etats contractants: BE, CH, DE, FR, GB, IT, LU, NL, SE**

1. Polymères d'amides d'acides carboxyliques à insaturation α,β N-substitués de la formule I

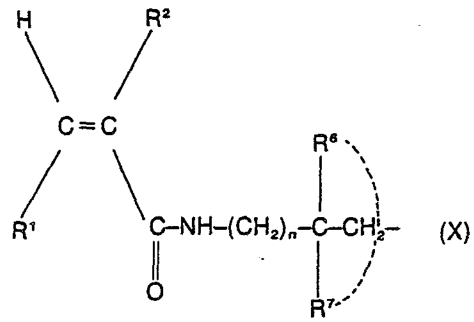

(I)

dans laquelle

$R^1$ et $R^2$ désignent chacun un atome d'hydrogène ou un radical méthyle,

X désigne un atome d'hydrogène, le reste d'une amine de la formule $-N(R^4)(R^5)$, dans laquelle $R^4$ et $R^5$ désignent chacun un radical alcoyle en $C_1$ à $C_4$ ou un groupe cycloalcoyle en $C_3$ à $C_6$, ou un groupe ammonium de la formule générale

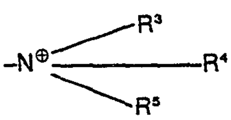 $A^{\ominus}$ (IV)

dans laquelle

$R^3$ désigne un atome d'hydrogène ou un radical alcoyle en $C_1$ à $C_4$,

$R^4$ et $R^5$ possèdent la signification définie ci-dessus et

A représente un anion salifiant,

$R^6$ et $R^7$ désignent chacun un radical alcoyle, de préférence un radical alcoyle inférieur en $C_1$ à $C_4$ et en particulier un radical méthyle, ou un groupe aryle ou forment ensemble un noyau cyclique aliphatique, en particulier un reste cyclopentyle ou cyclohexyle et

n est un nombre valant de 1 à 10.

2. Polymères d'amides carboxyliques à insaturation α,β N-substitués de la formule I, préparés par polymérisation par des procédés connus en soi du composé non saturé de départ, soit seul, soit en mélange avec d'autres monomères polymérisables.

3. Les homo-polymères suivant la revendication 1 ou la revendication 2.

4. Copolymères suivant la revendication 1 ou 2 de monomères de la formule I et du styrène, de 1 α-méthylstyrène, de la vinyl-pyridine, du nitrile acrylique, du nitrile méthacrylique, de l'amide acrylique, de l'amide méthacrylique, de l'amide acrylique ou méthacrylique N-mono- ou N-disubstitué, d'un acrylate ou d'un méthacrylate, de l'acide acrylique, de l'acide méthacrylique, d'un ester vinylique, d'un éther vinylique, de l'acide fumarique, de l'acide maléique, du divinylbenzène, du bis-acrylamide de méthylène ou d'acrylate d'allyle.

5. Copolymères suivant la revendication 4, caractérisés en ce qu'ils sont constitués à raison de 5 à 60 et en particulier de 10 à 50% en poids de monomères de la formule I et à raison de 95 à 40 et en particulier de 90 à 50% en poids de comono-

mères selon la revendication 4, dont l'amide acrylique est particulièrement préféré.

6. Utilisation des homo- et co-polymères suivant les revendications 1 à 5 comme additifs de floculation et de sédimentation, comme adjuvants de déshydratation des boues de curage, comme additifs de déshydratation et de rétention dans l'industrie papetière, comme additifs pour huiles minérales et comme résines échangeuses d'ions.

**Revendication pour l'Etat contractant: AT**

Utilisation d'homo- et de co-polymères d'amides d'acides carboxyliques à insaturation α,β N-substitués de la formule

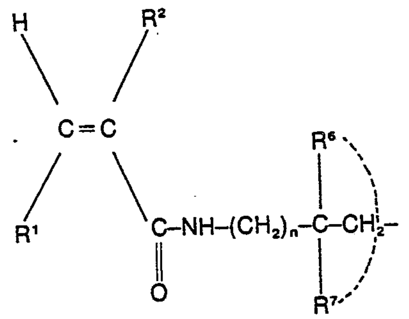

(I)

(X)

dans laquelle

$R^1$ et $R^2$ désignent chacun un atome d'hydrogène ou un radical méthyle,

X désigne un atome d'hydrogène, le reste d'une amine de la formule $-N(R^4)(R^5)$, dans laquelle $R^4$ et $R^5$ désignent chacun un radical alcoyle en $C_1$ à $C_4$ ou un groupe cycloalcoyle en $C_3$ à $C_6$, ou un groupe ammonium de la formule générale

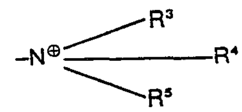

$A^{\ominus}$ (IV)

dans laquelle

$R^3$ désigne un atome d'hydrogène ou un radical alcoyle en $C_1$ à $C_4$,

$R^4$ et $R^5$ possèdent la signification définie ci-dessus et

A représente un anion salifiant,

$R^6$ et $R^7$ désignent chacun un radical alcoyle, de préférence un radical alcoyle inférieur en $C_1$ à $C_4$ et en particulier un radical méthyle, ou un groupe aryle ou forment ensemble un noyau cyclique aliphatique, en particulier un reste cyclopentyle ou cyclohexyle et

n est un nombre valant de 1 à 10, comme additifs de floculation et de sédimentation, comme adjuvants de déshydratation des boues de curage, comme additifs de déshydratation et de rétention dans l'industrie papetière, comme additifs pour huiles minérales et comme résines échangeuses d'ions.

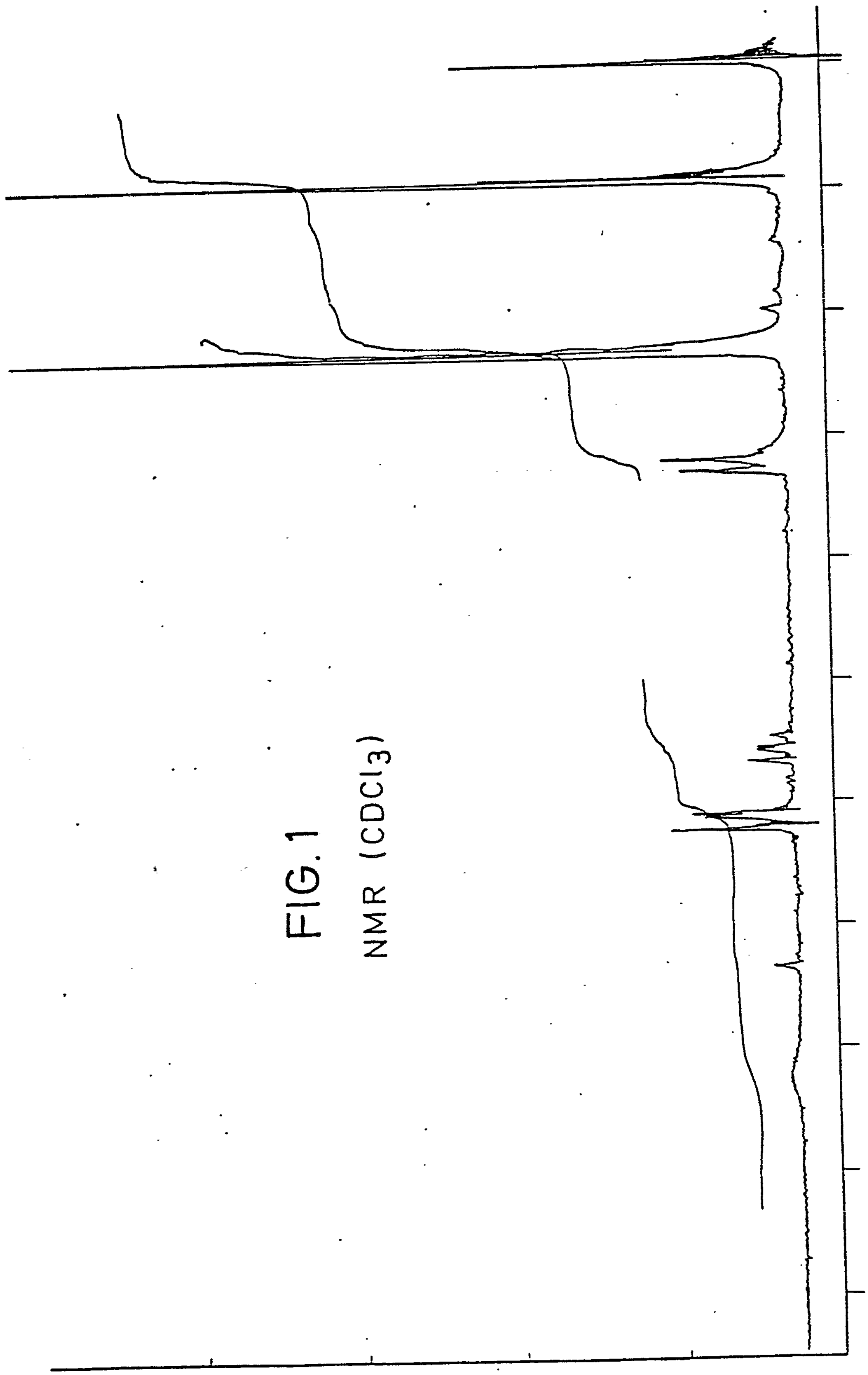

FIG. 1
NMR $(CDCl_3)$

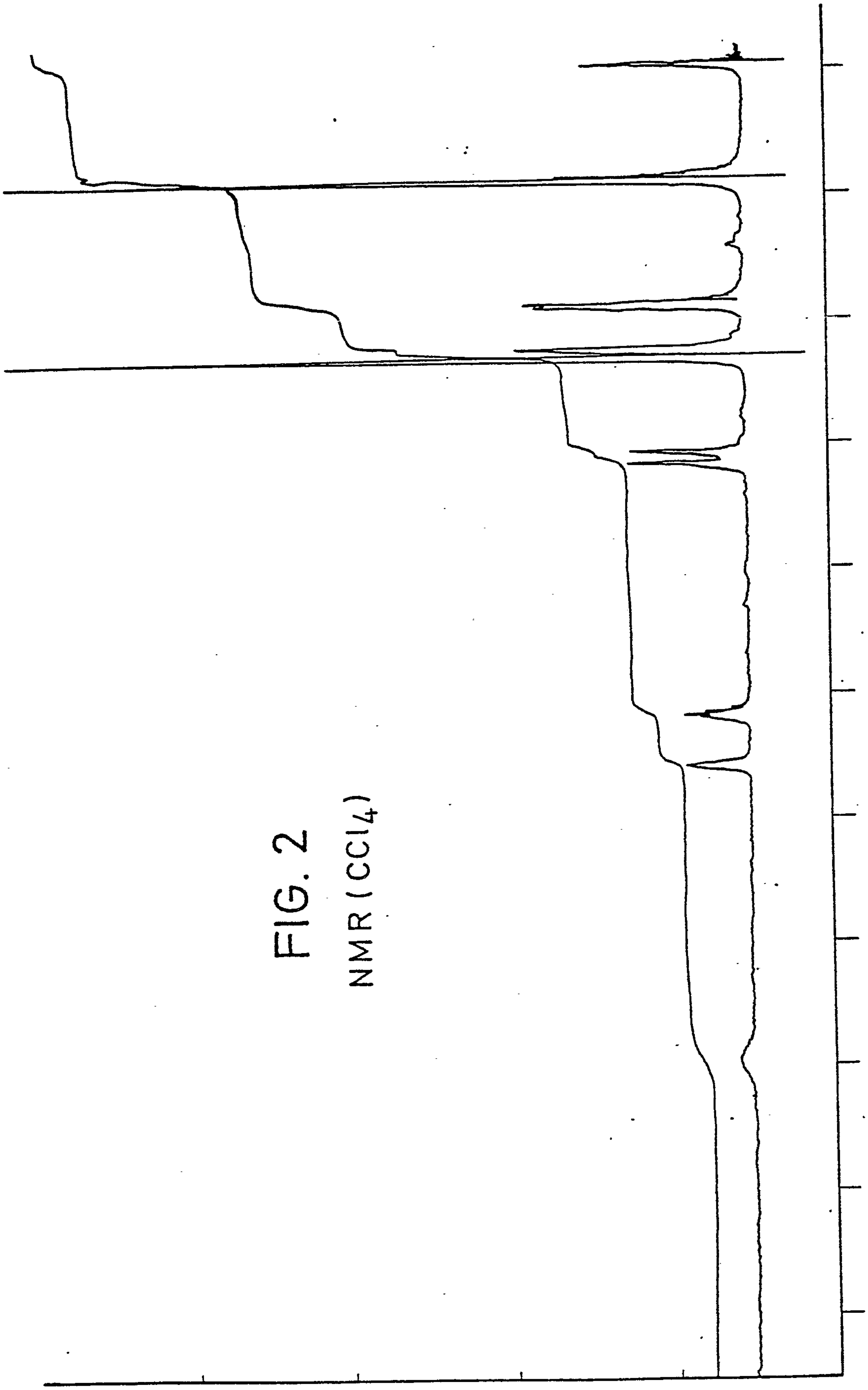

FIG. 2
NMR ($CCl_4$)

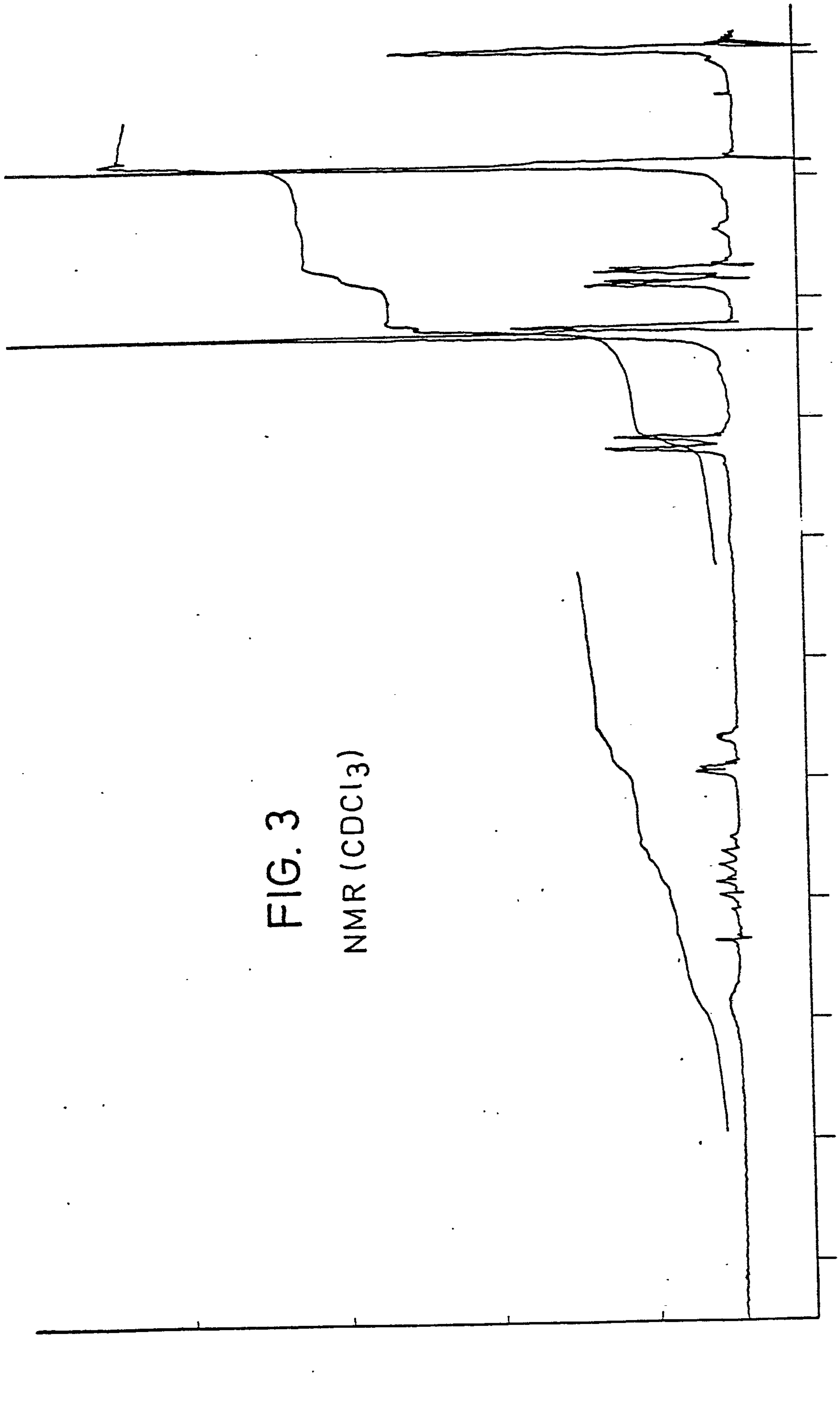

FIG. 3
NMR ($CDCl_3$)

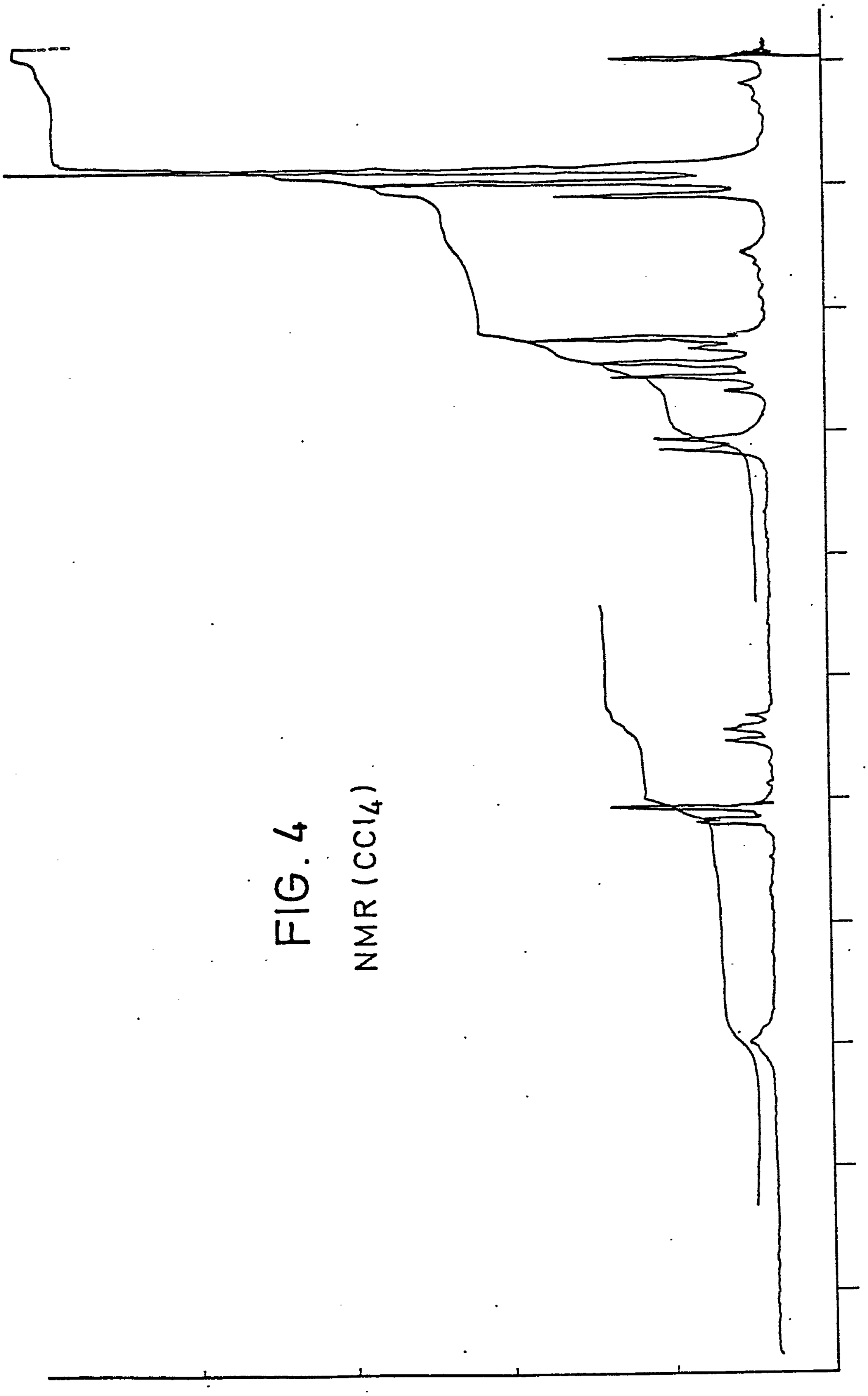

FIG. 4
NMR ($CCl_4$)

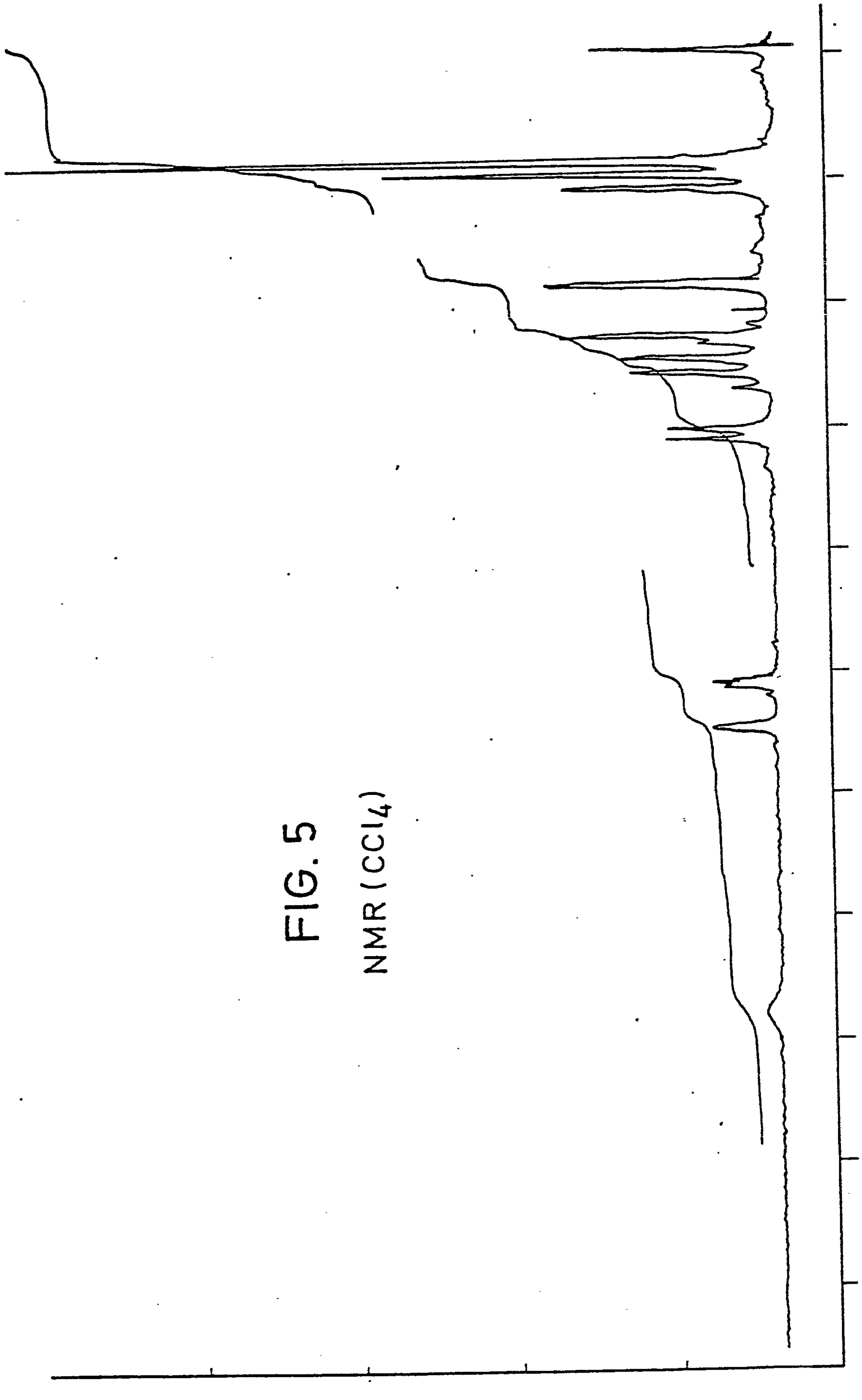

FIG. 5

NMR ($CCl_4$)

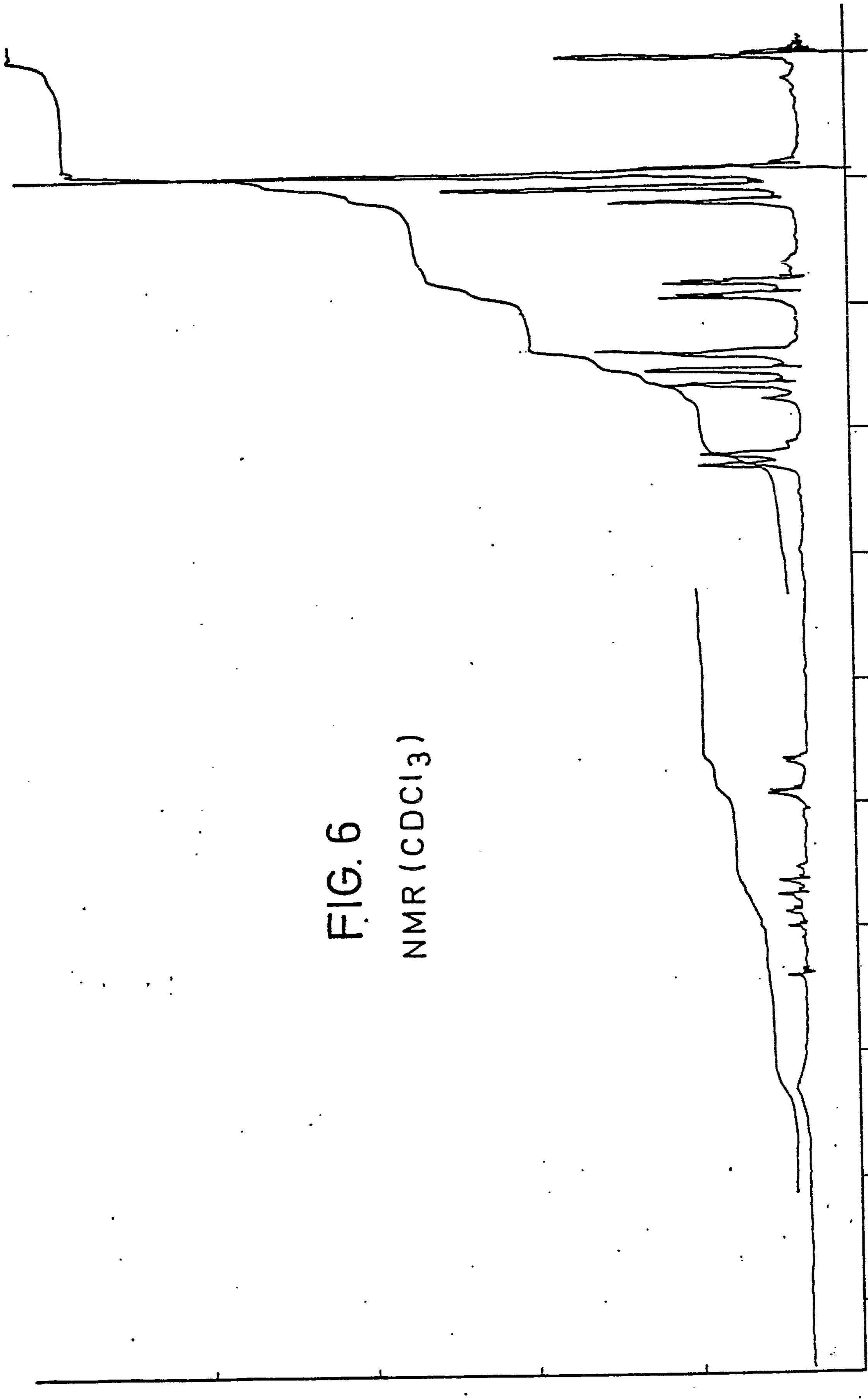

FIG. 6
NMR ($CDCl_3$)

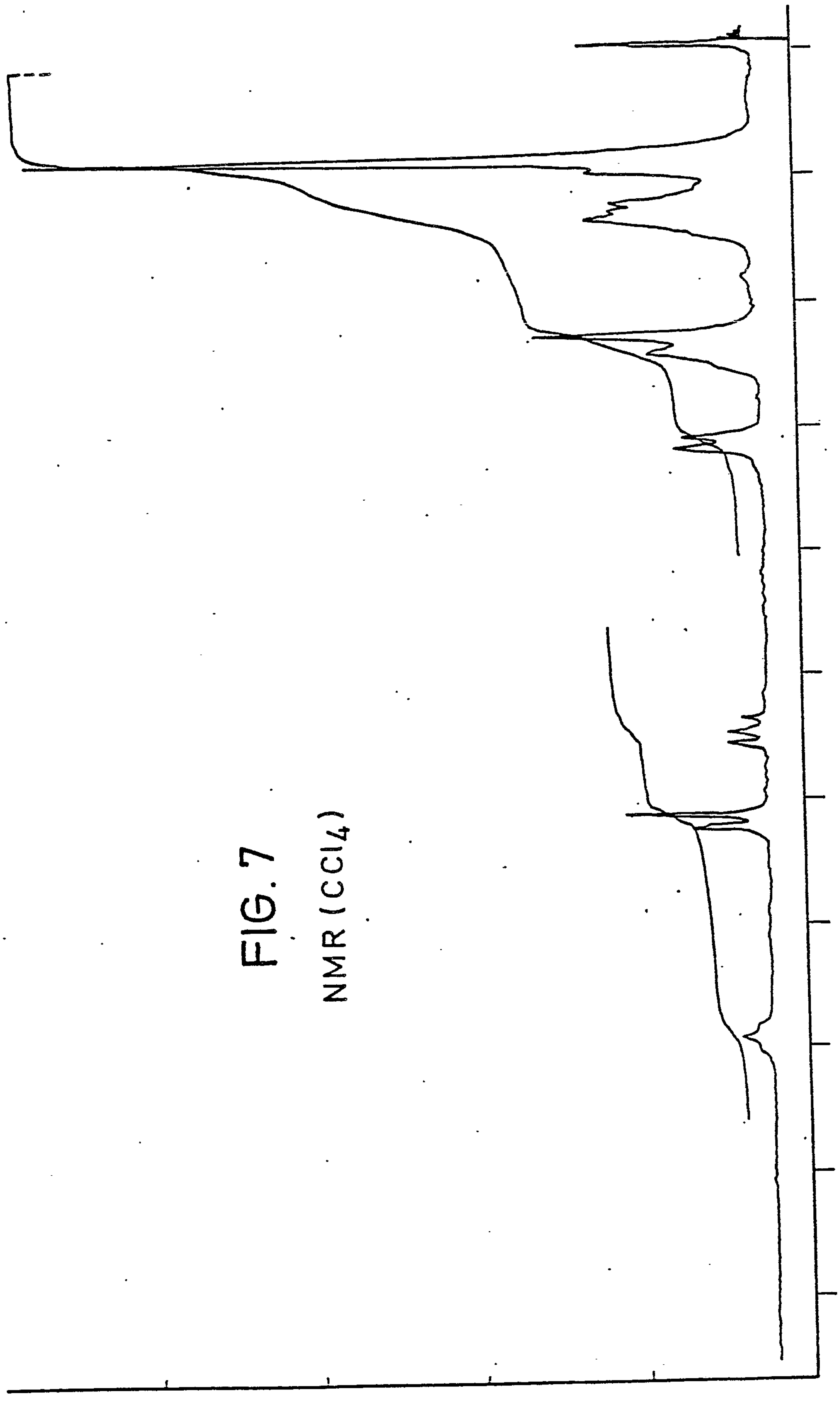

FIG. 7

NMR ($CCl_4$)

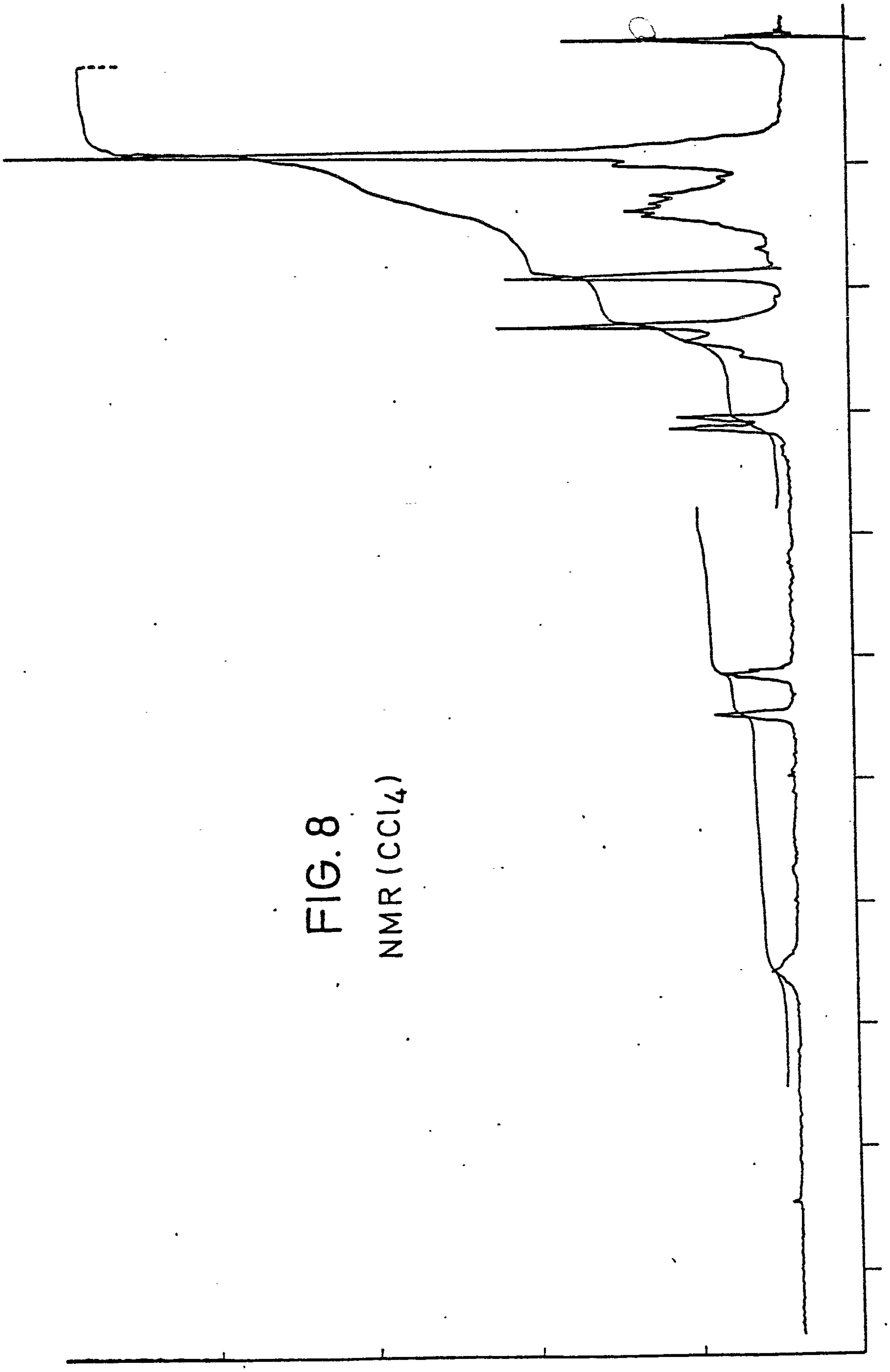

FIG. 8
NMR ($CCl_4$)

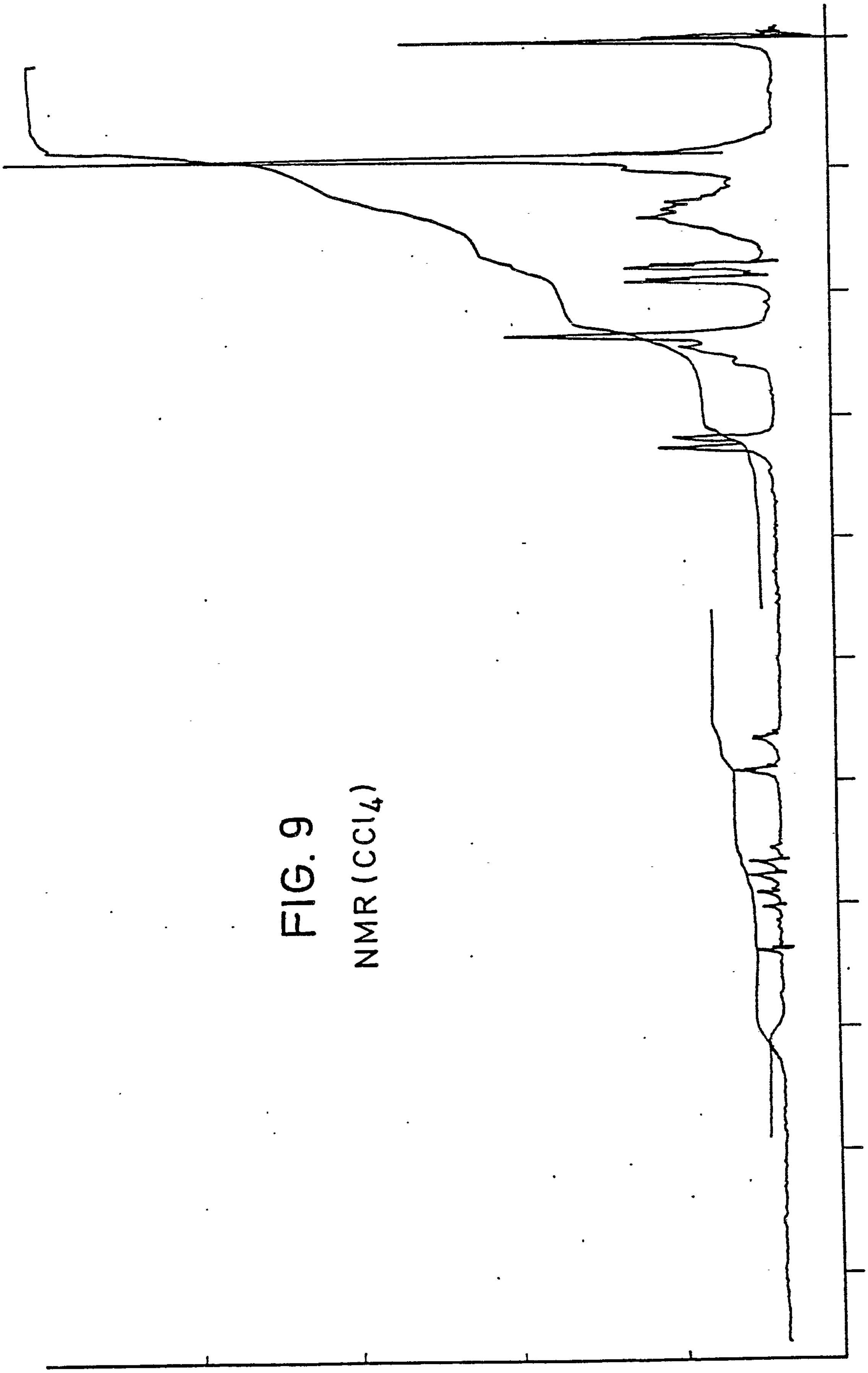

FIG. 9
NMR ($CCl_4$)

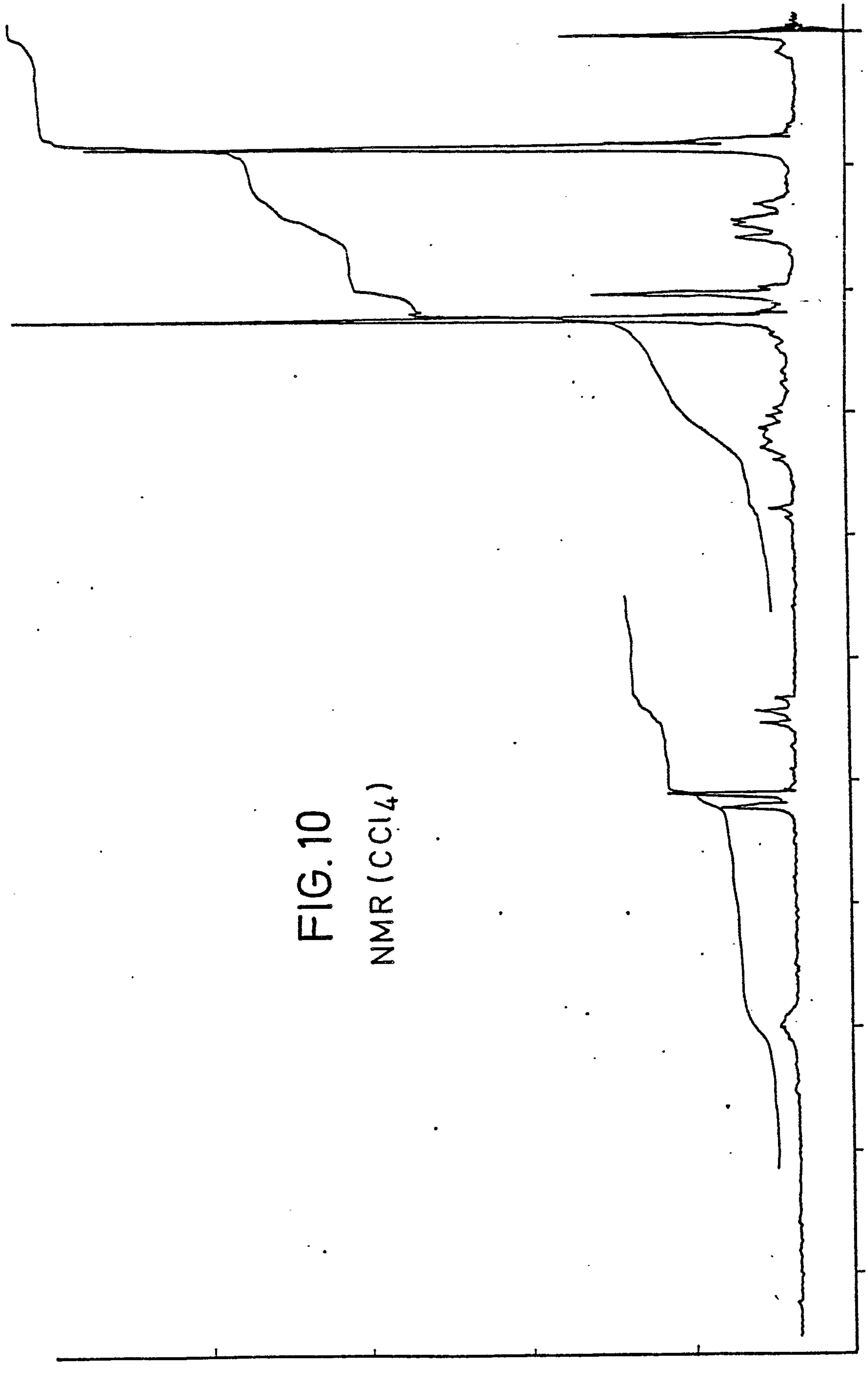

FIG. 10
NMR ($CCl_4$)

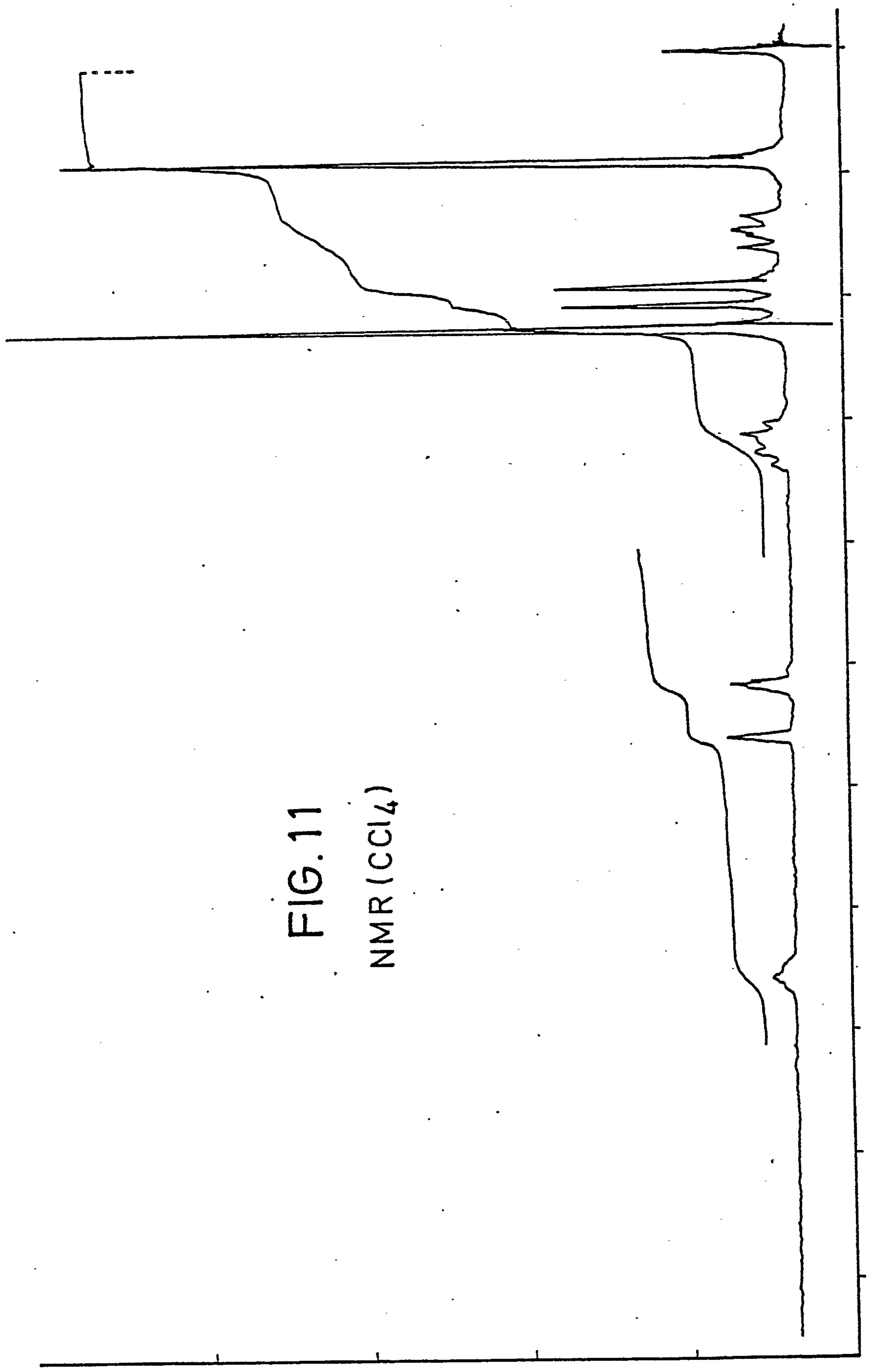

FIG. 11

NMR ($CCl_4$)

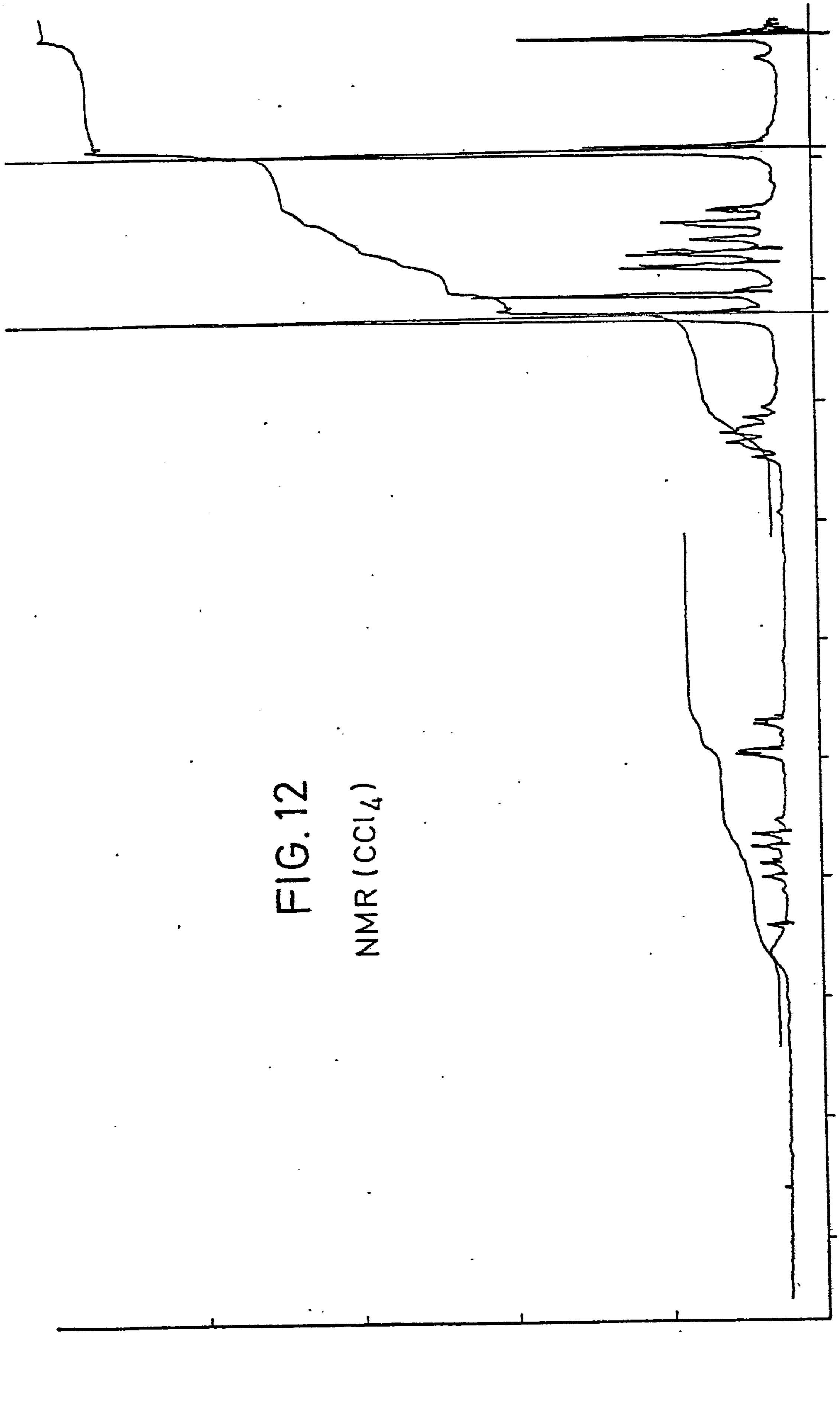

FIG. 12
NMR ($CCl_4$)

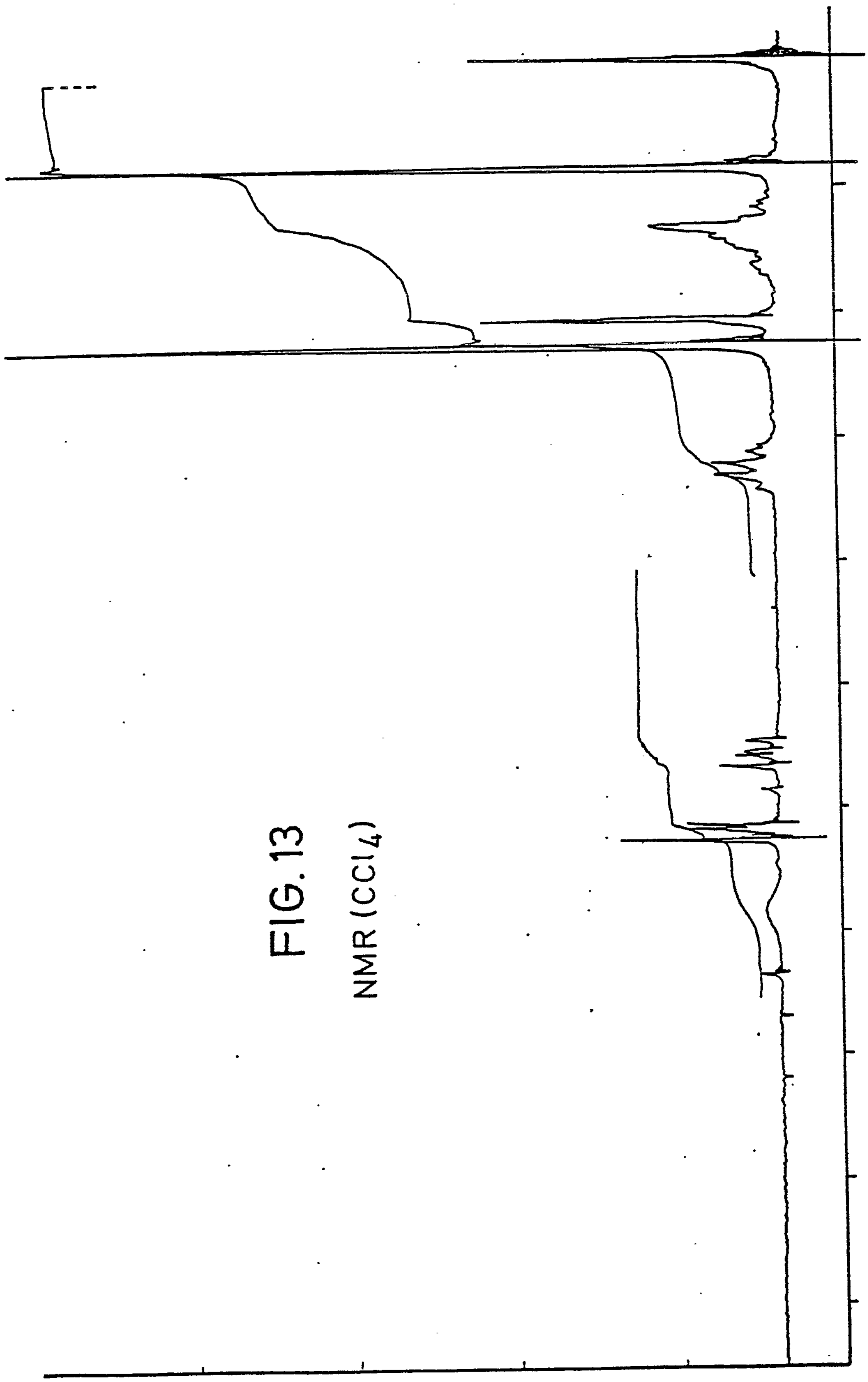

FIG. 13
NMR ($CCl_4$)

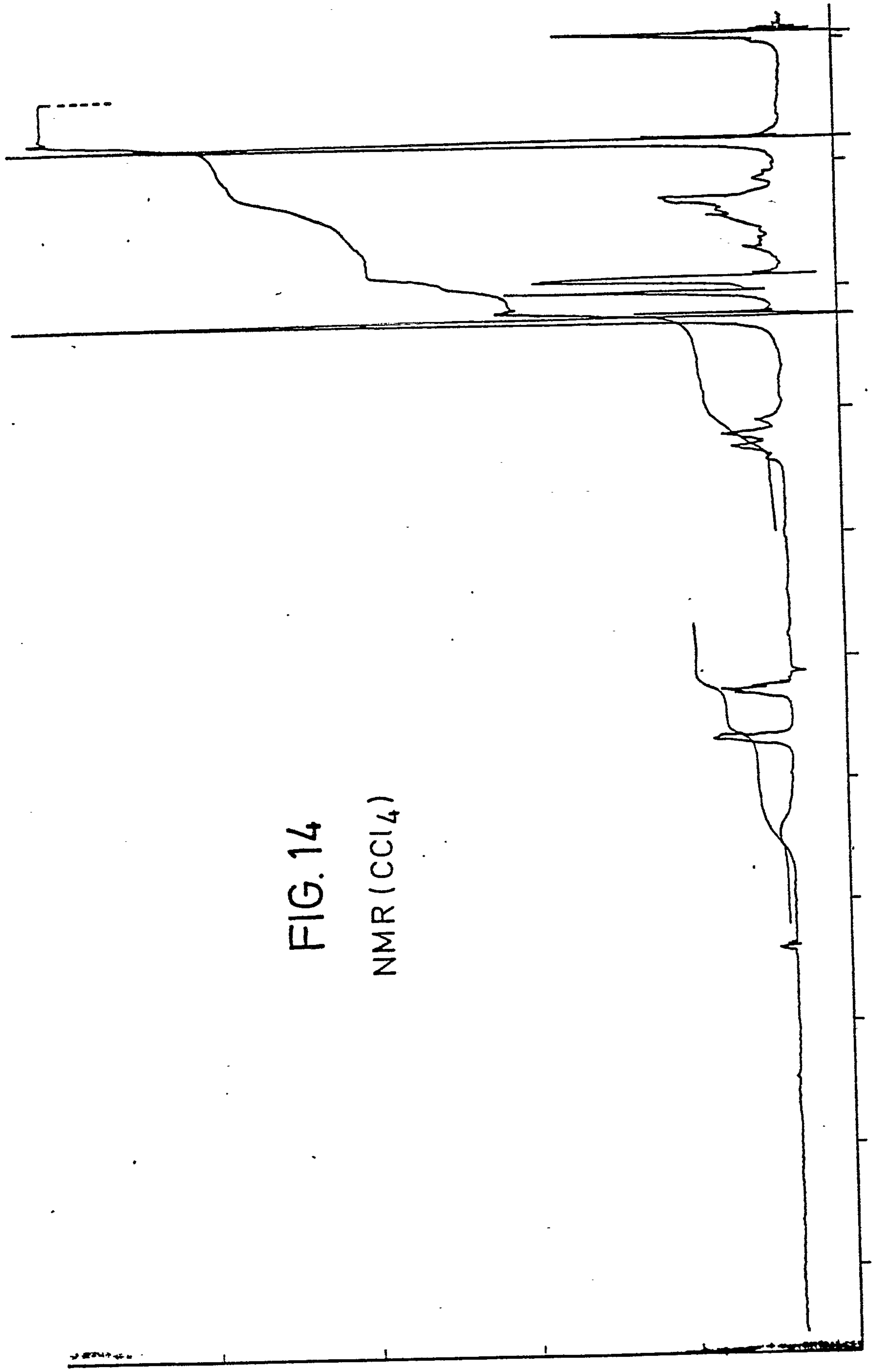

FIG. 14
NMR ($CCl_4$)

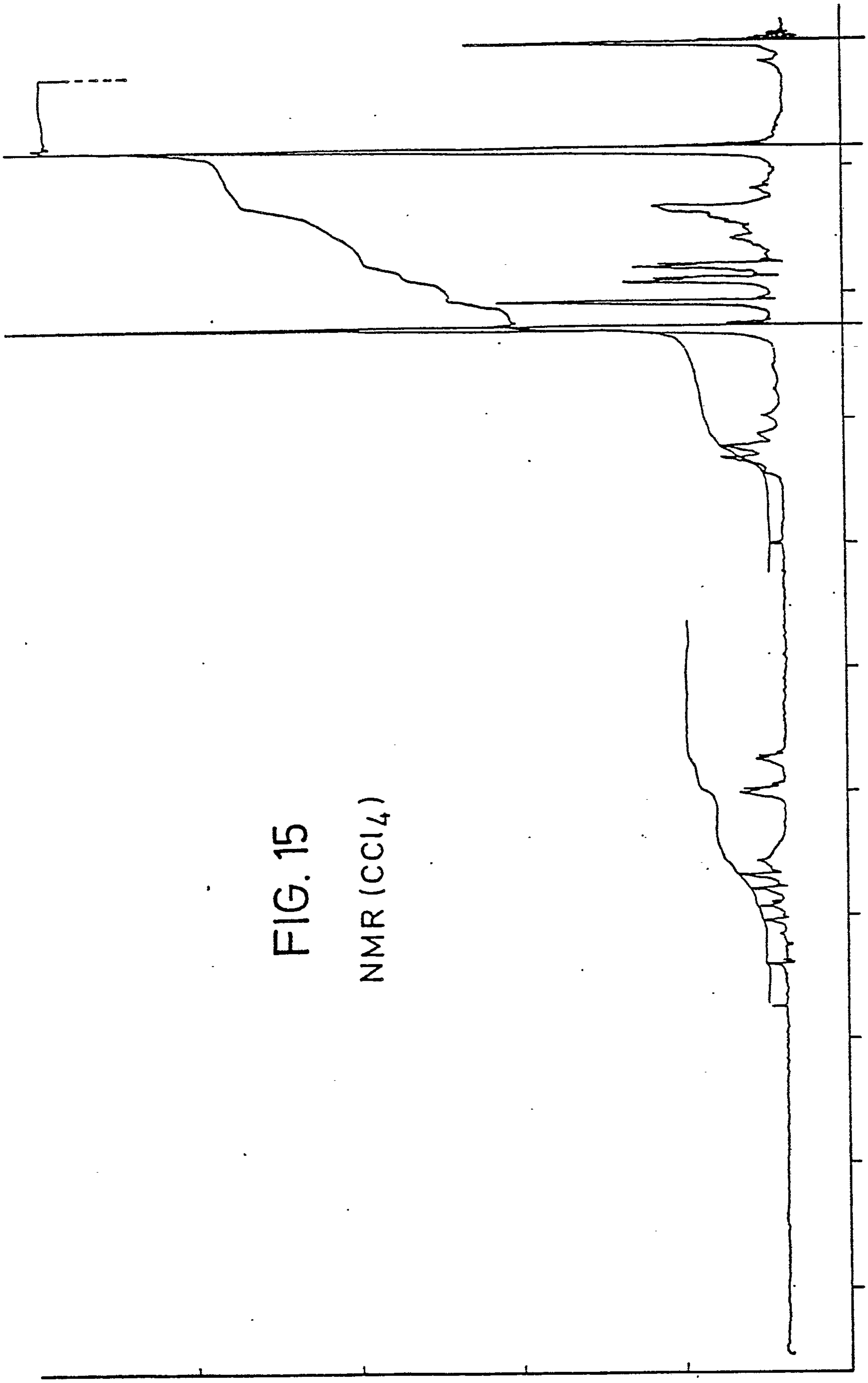

FIG. 15

NMR ($CCl_4$)

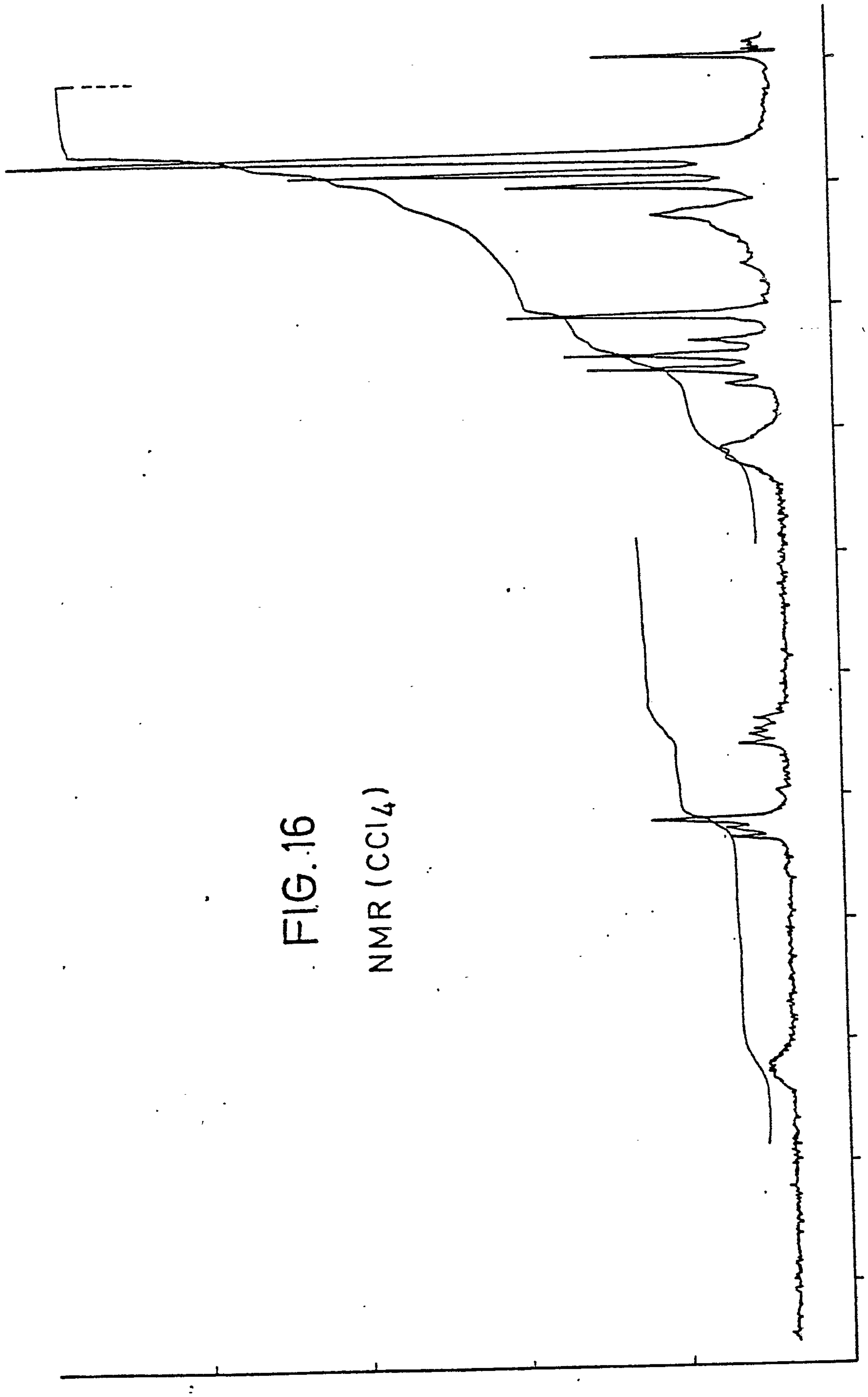

FIG.16
NMR ($CCl_4$)

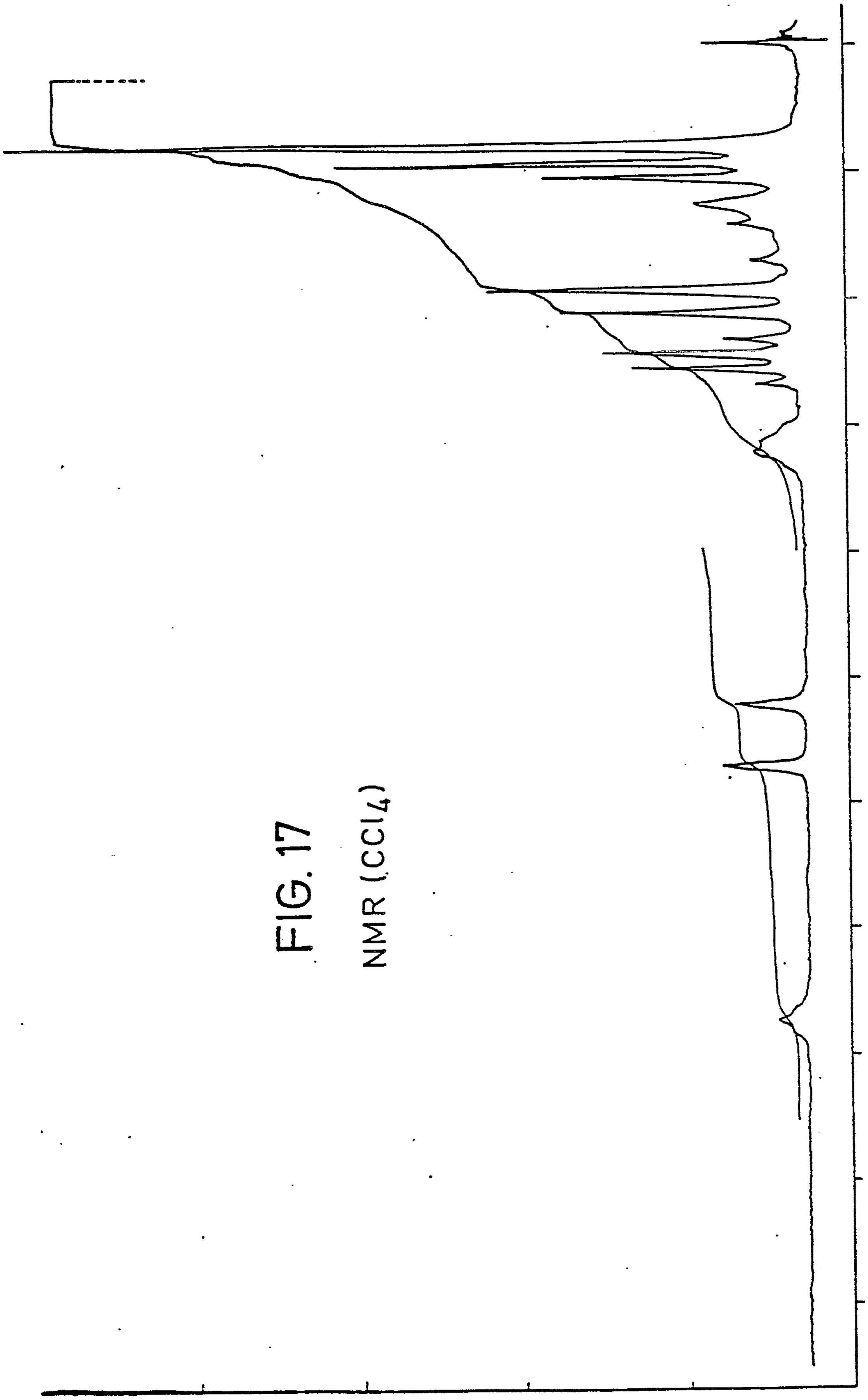

FIG. 17

NMR ($CCl_4$)

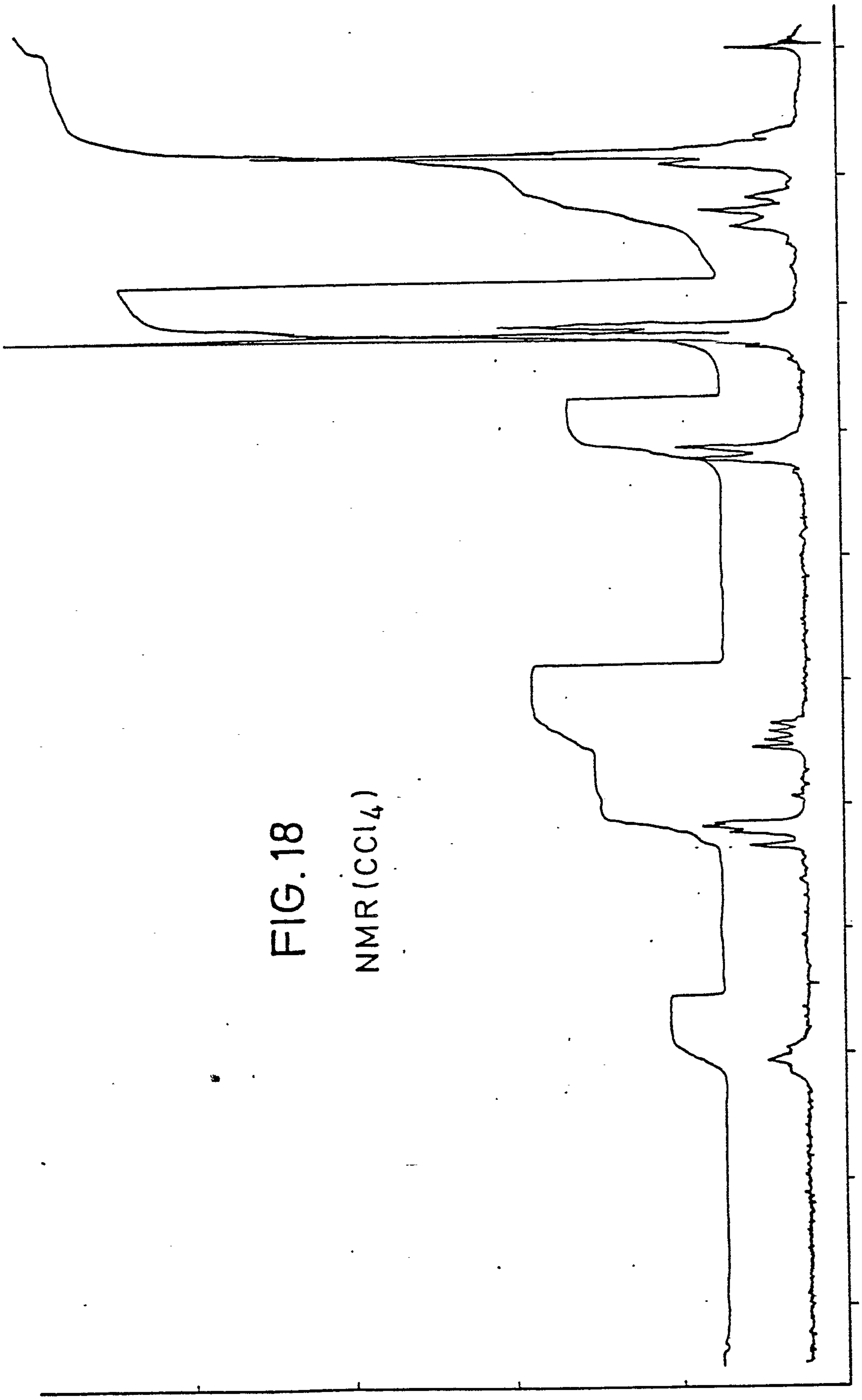

FIG. 18

NMR ($CCl_4$)

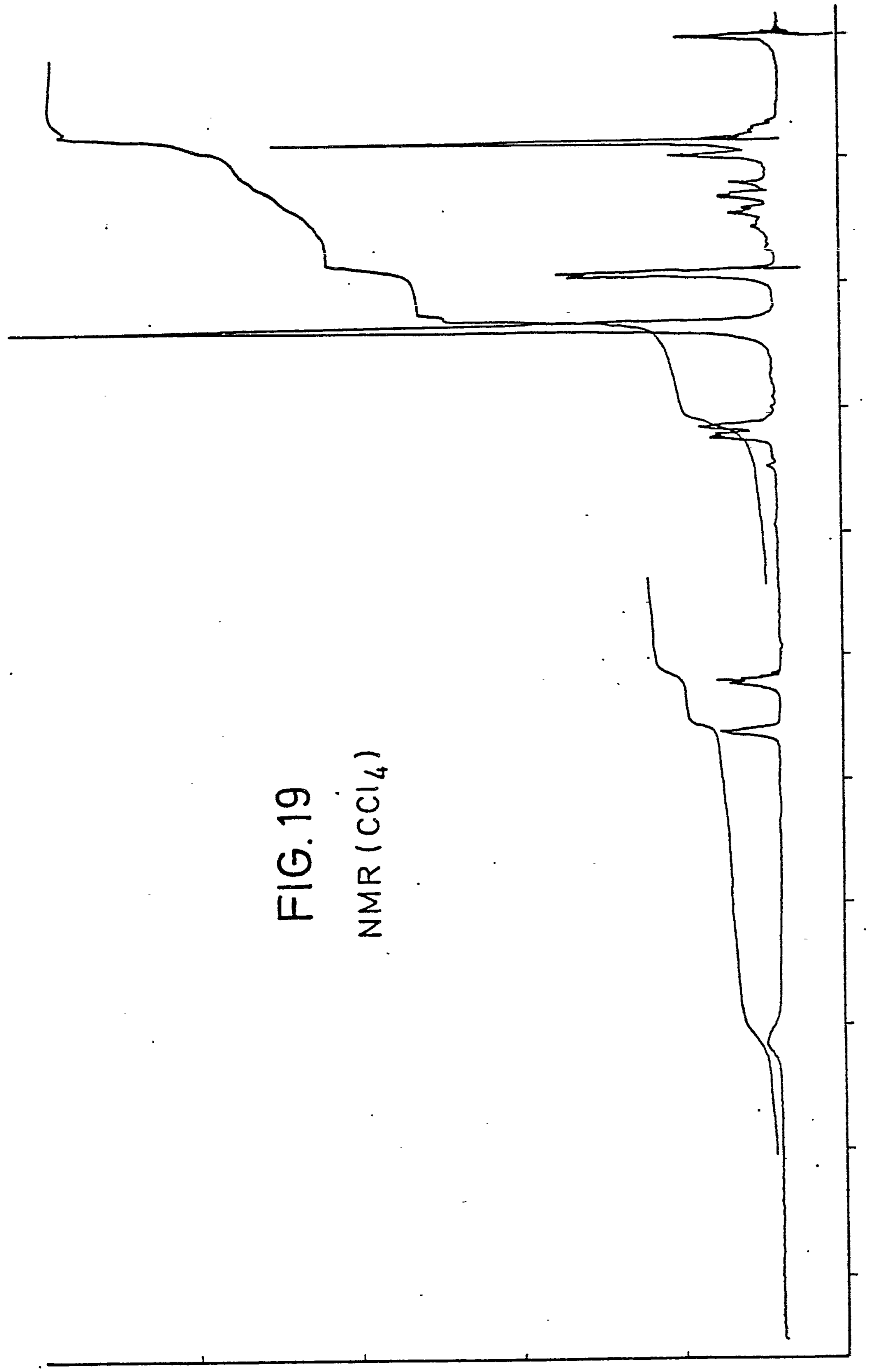

FIG. 19

NMR ($CCl_4$)

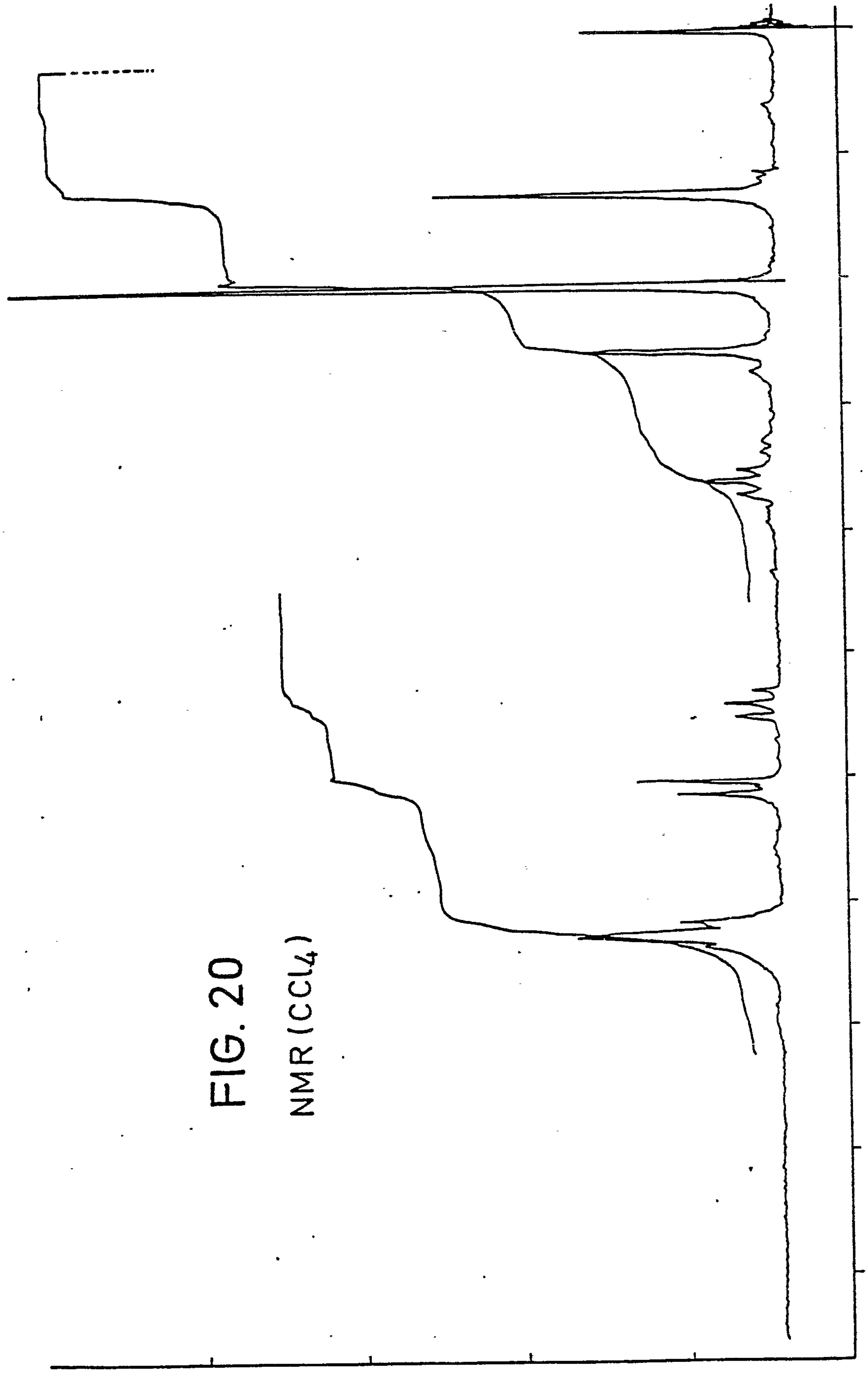

FIG. 20
NMR ($CCl_4$)

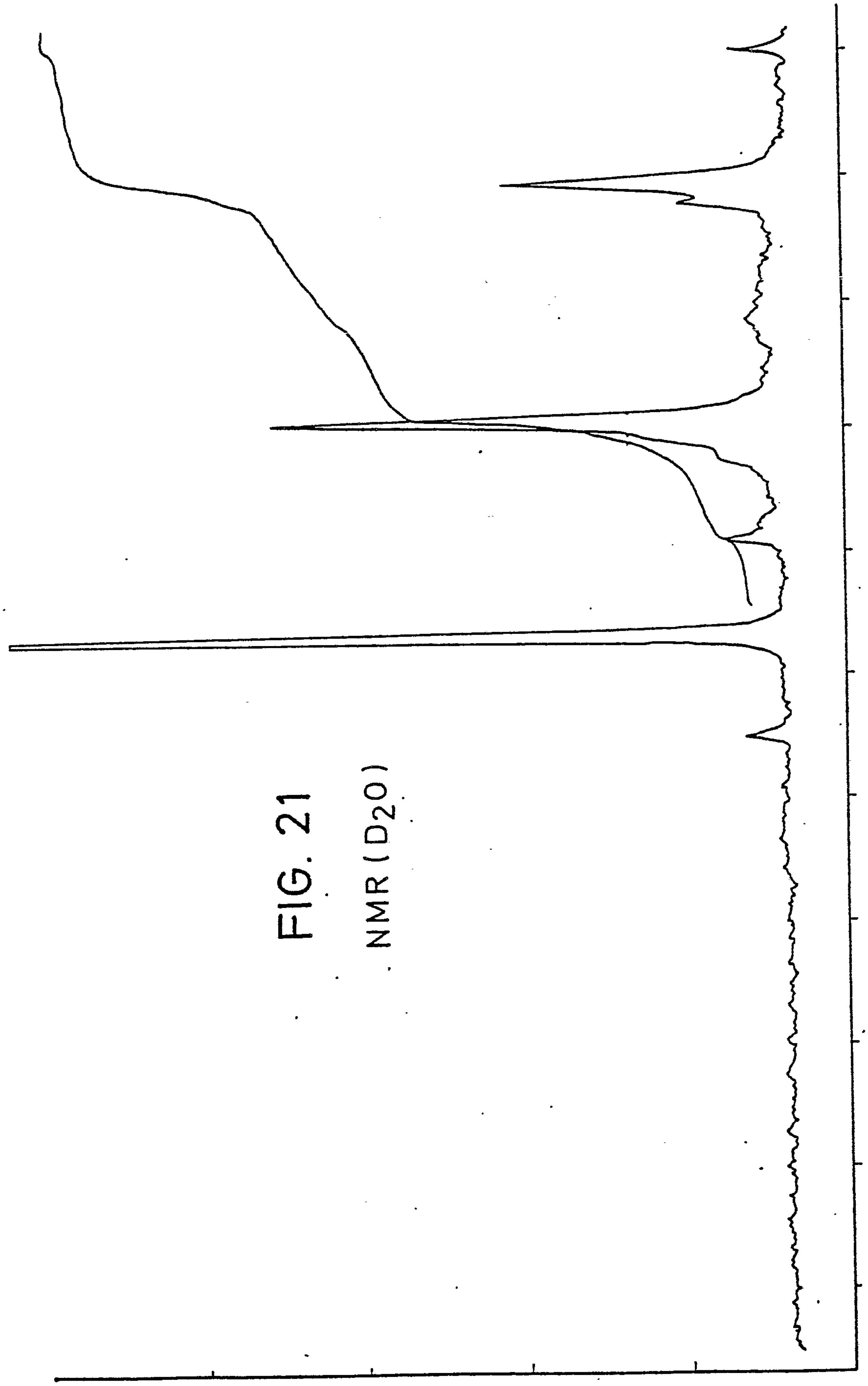

FIG. 21
NMR ( $D_2O$ )

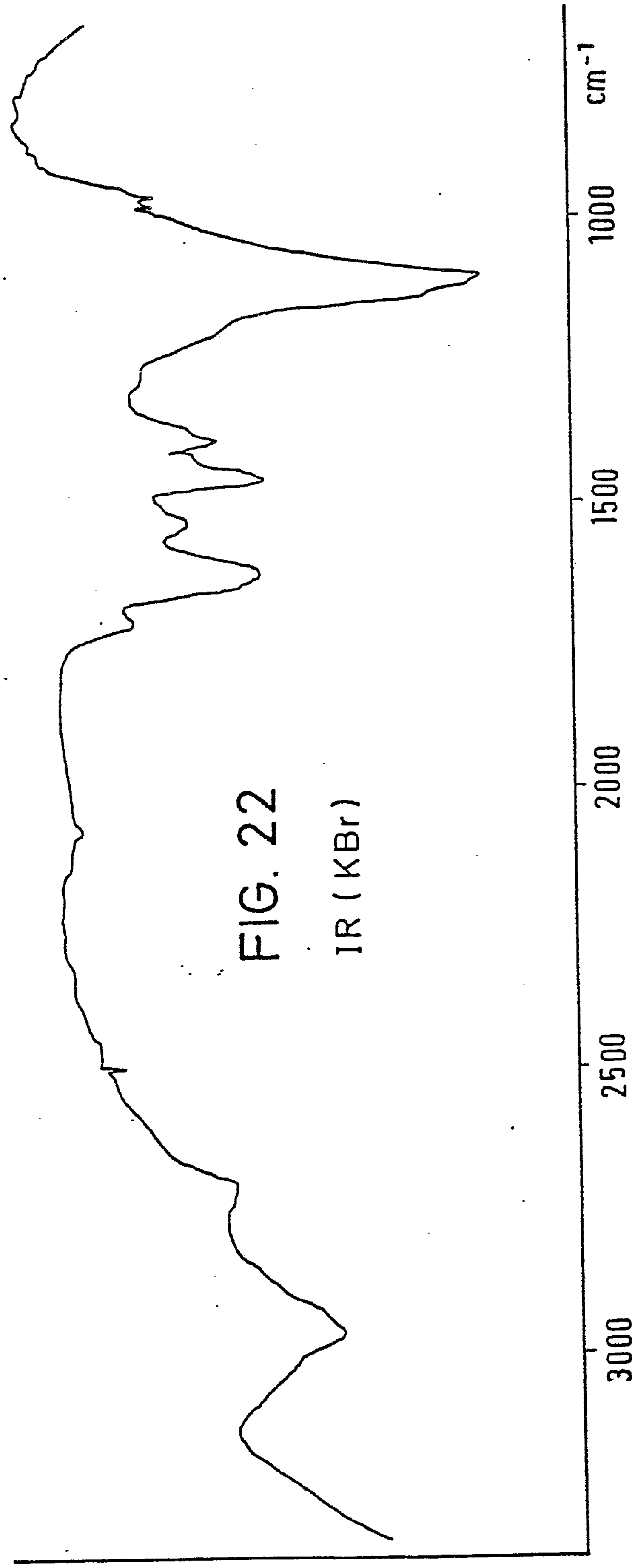


FIG. 22
IR ( KBr )

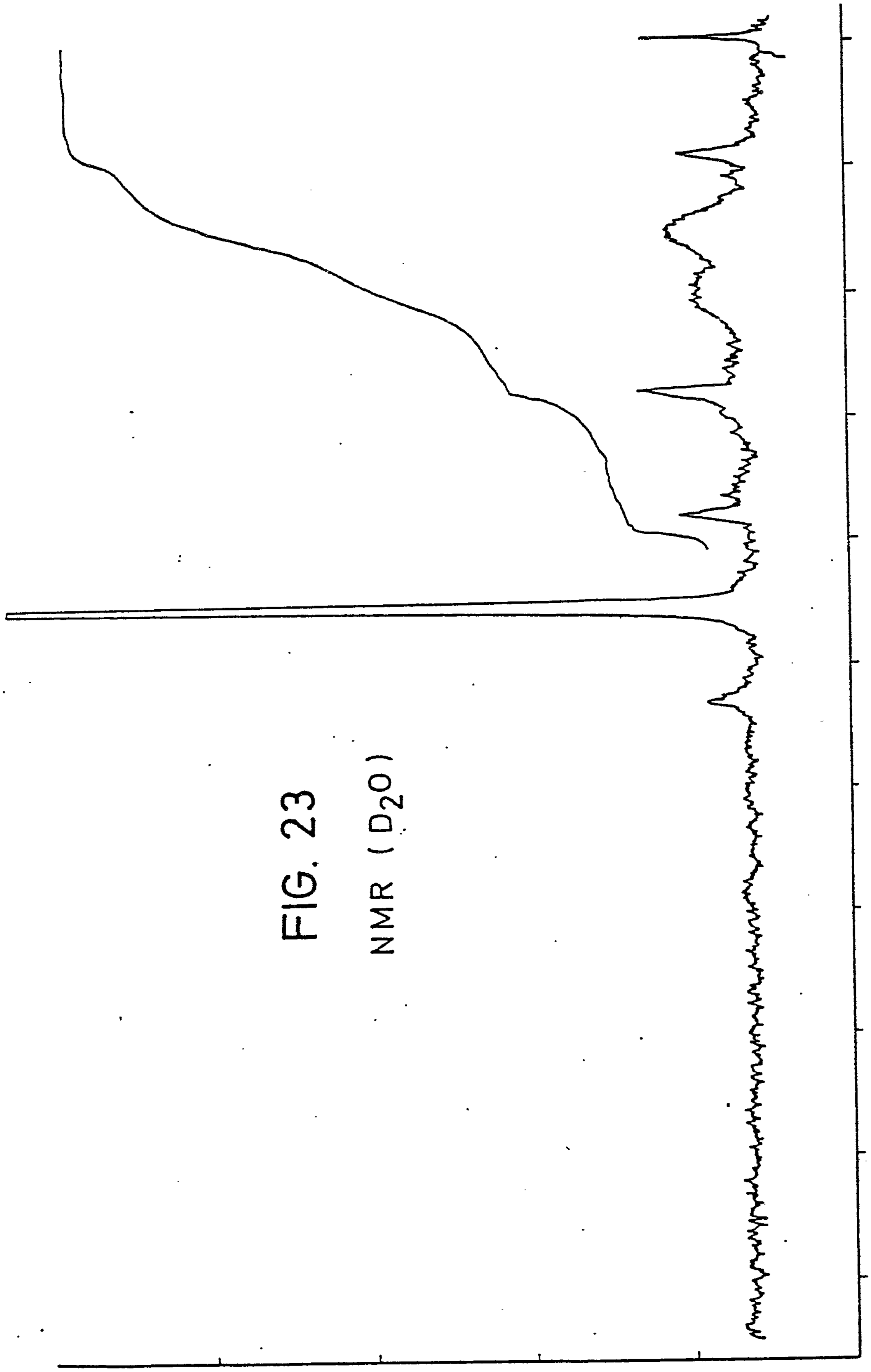

FIG. 23

NMR ($D_2O$)

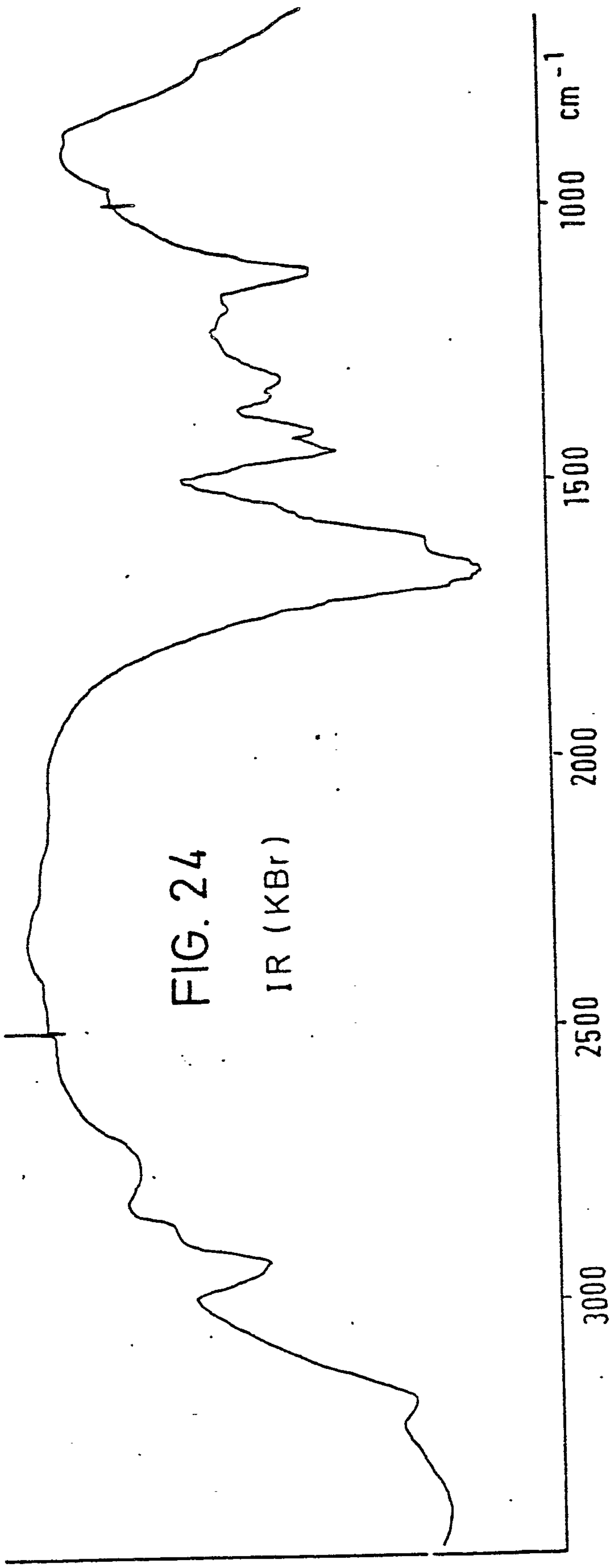


FIG. 24

IR (KBr)

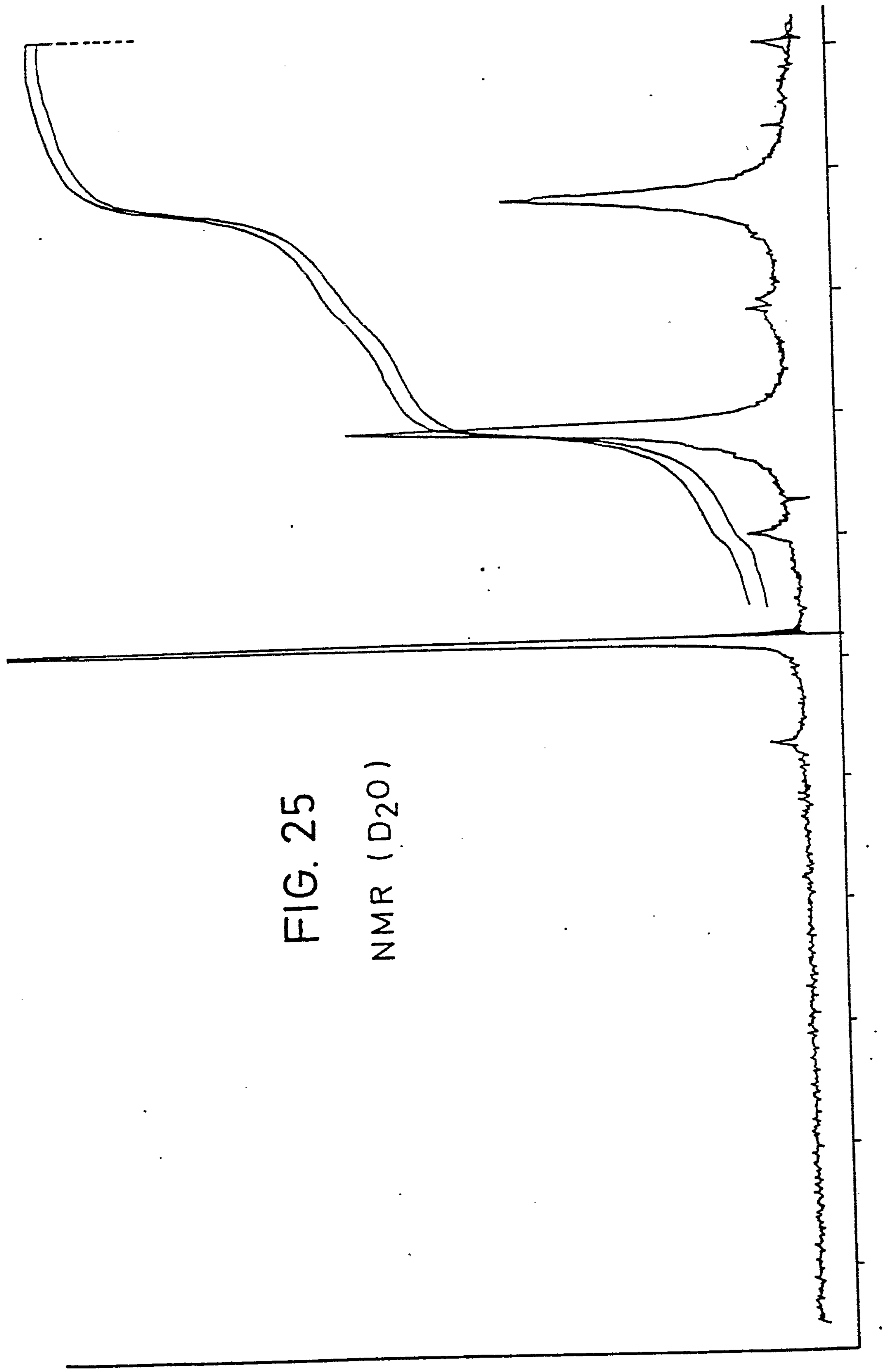

FIG. 25

NMR ($D_2O$)

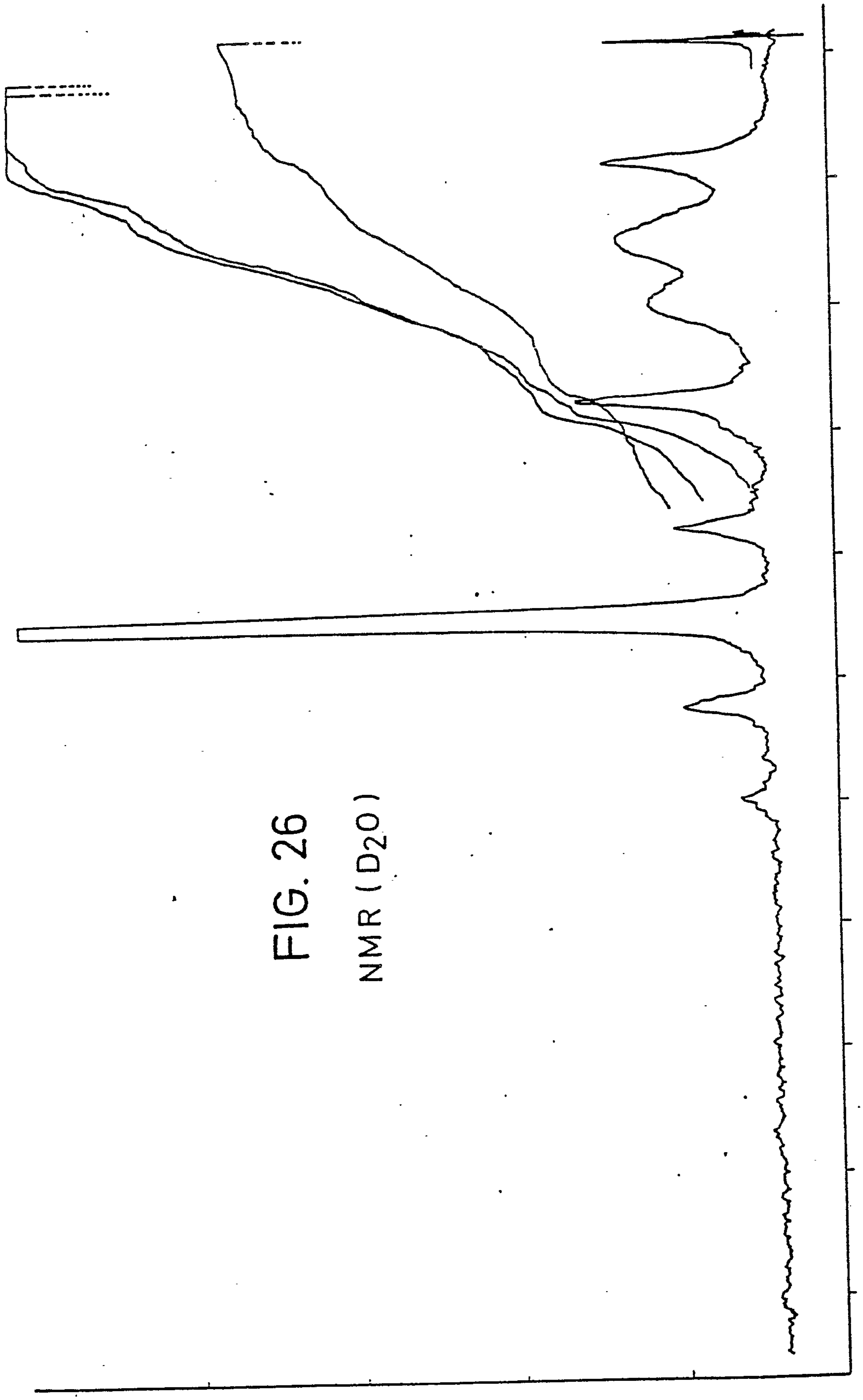

FIG. 26

NMR ($D_2O$)

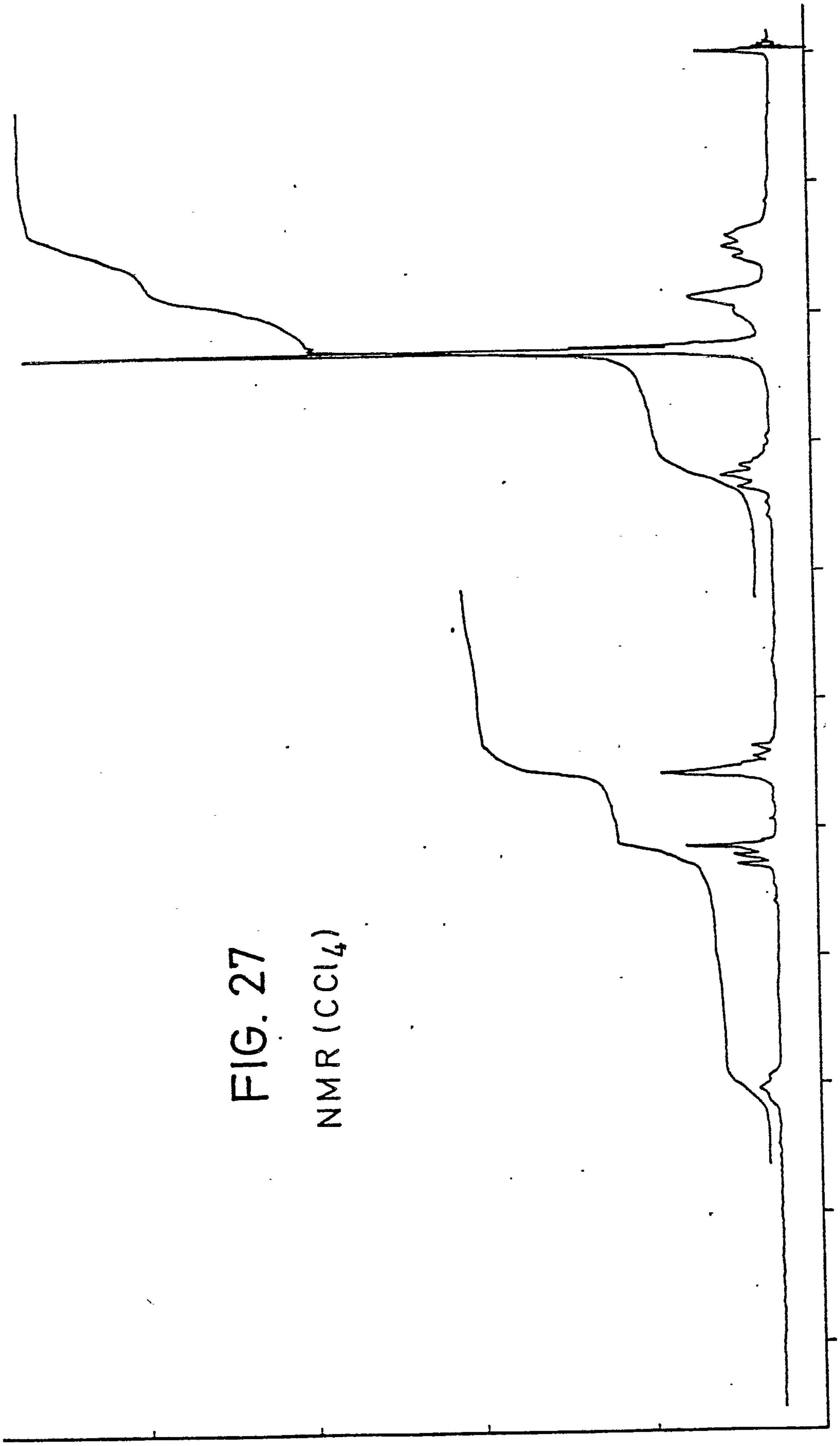

FIG. 27
NMR ($CCl_4$)

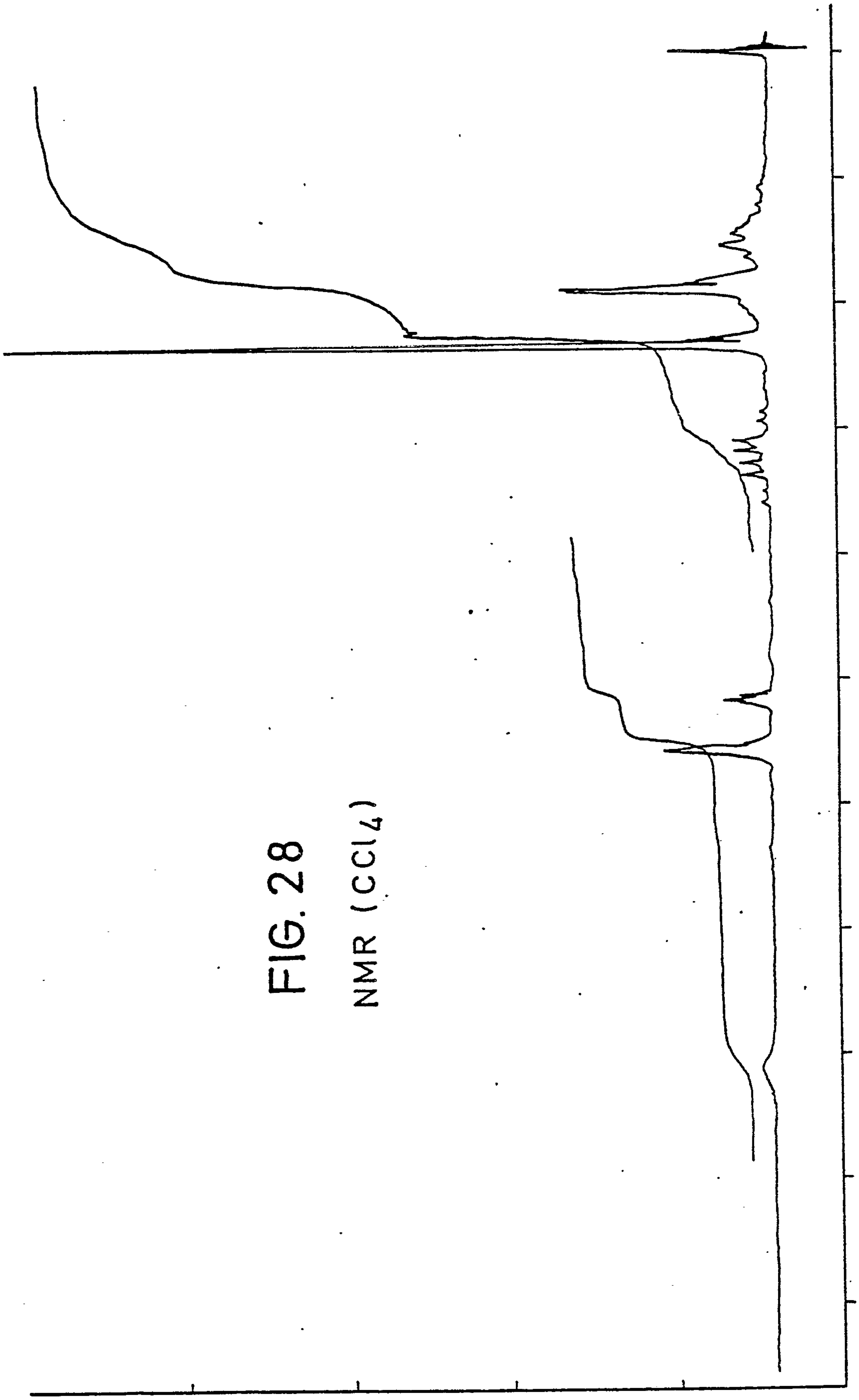

FIG. 28
NMR ($CCl_4$)